(19) Europäisches Patentamt
European Patent Office
Office européen des brevets

(11) EP 0 770 640 B1

(12) EUROPÄISCHE PATENTSCHRIFT

(45) Veröffentlichungstag und Bekanntmachung des Hinweises auf die Patenterteilung:
**23.04.2003 Patentblatt 2003/17**

(51) Int Cl.$^7$: **C08J 3/16**

(21) Anmeldenummer: **96116679.0**

(22) Anmeldetag: **17.10.1996**

(54) **Verfahren zur Herstellung von in wässrigem Medium redispergierbaren Polymerisatpulvern**

Process for preparing polymer powders which are redispersible in aqueous media

Procédé pour préparer des poudres polymères rédispersables dans des milieux aqueux

(84) Benannte Vertragsstaaten:
**AT BE CH DE DK ES FI FR GB GR IE IT LI NL PT SE**

(30) Priorität: **28.10.1995 DE 19540305**

(43) Veröffentlichungstag der Anmeldung:
**02.05.1997 Patentblatt 1997/18**

(73) Patentinhaber: **BASF Aktiengesellschaft**
**67063 Ludwigshafen (DE)**

(72) Erfinder:
- **Pakusch, Joachim, Dr.**
**67065 Ludwigshafen (DE)**
- **Dieing, Reinhold, Dr.**
**67098 Bad Dürkheim (DE)**
- **Tropsch, Jürgen, Dr.**
**67354 Römerberg (DE)**

(56) Entgegenhaltungen:
**EP-A- 0 084 837** **EP-A- 0 629 650**
**DE-B- 1 013 073**

- **PATENT ABSTRACTS OF JAPAN vol. 095, no. 005, 30.Juni 1995 & JP 07 053728 A (HOECHST GOSEI KK), 28.Februar 1995,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 770 640 B1

## Beschreibung

Die vorliegende Erfindung betrifft ein Verfahren zur Herstellung von in wäßrigem Medium redispergierbaren Polymerisatpulvern durch Trocknung einer wäßrigen Polymerisatdispersion, deren in wäßrigem Medium dispergierte Polymerisatteilchen eine positive oder eine negative elektrische Oberflächenladung aufweisen, unter Zusatz eines Trocknungshilfsmittels.

Außerdem betrifft die vorliegende Erfindung die bei Ausübung des Verfahrens erhältlichen, in Wasser redispergierbaren, Polymerisatpulver und die Verwendung dieser Pulver (z.B. als Additiv in mineralischen Bindemitteln oder als Bindemittel von Kunstharz-Putzen) sowie zur Herstellung der Pulver erforderliche, Polyelektrolyt zugesetzt enthaltende, wäßrige Polymerisatdispersionen.

Wäßrige Polymerisatdispersionen (Latices) sind allgemein bekannt. Es handelt sich um fluide Systeme, die als disperse Phase in wäßrigem Dispergiermedium aus mehreren ineinander verschlungenen Polymerisatketten bestehende Polymerisatknäuel (sogenannte Polymerisatteilchen) in disperser Verteilung befindlich enthalten. Der Durchmesser der Polymerisatteilchen liegt häufig im Bereich von 10 nm bis 1000 nm. Ebenso wie Polymerisatlösungen beim Verdampfen des Lösungsmittels, weisen wäßrige Polymerisatdispersionen beim Verdampfen des wäßrigen Dispergiermediums das Potential zur Ausbildung von Polymerisatfilmen auf, weshalb sie insbesondere als Bindemittel, Klebstoffe und Beschichtungsmittel Anwendung finden (besonders hervorzuheben ist ihre Verwendung als Bindemittel für Kunstharzputze oder hochpigmentierte Innenfarben).

Für die Eigenschaften wäßriger Polymerisatdispersionen von zentraler Bedeutung ist die Größe der in ihnen in disperser Verteilung enthaltenen Polymerisatteilchen. Insbesondere Eigenschaften wie die Viskosität der wäßrigen Polymerisatdispersion oder der Glanz ihrer Verfilmungen sind vom Durchmesser der dispergierten Polymerisatteilchen bzw., genauer, von der Durchmesserverteilung der dispergierten Polymerisatteilchen abhängig (Verfilmungen kleiner Polymerisatteilchen weisen bei identischem Polymerisat in der Regel einen höheren Glanz auf; eine breite Verteilung der Durchmesser bedingt in der Regel eine geringere Viskosität der wäßrigen Polymerisatdispersion; Dispersionen kleiner Polymerisatteilchen verfügen in der Regel über ein größeres Pigmentbindevermögen etc.).

Nachteilig an der Applikationsform "wäßrige Polymerisatdispersion" ist jedoch, daß ihr Herstellort in der Regel vom Gebrauchsort verschieden ist. Ihr Transport vom Herstellort zum Gebrauchsort impliziert jedoch neben dem Transport des letztlich den Polymerisatfilm im wesentlichen alleine konstituierenden Polymerisats zusätzlich stets den Transport des überall leicht verfügbaren Dispergiermediums "Wasser". Auch können wäßrige Polymerisatdispersionen mineralischen Bindemitteln zum Zwecke deren Modifikation erst am Gebrauchsort zugesetzt werden, da diese ansonsten vor Gebrauch aushärten.

Eine wünschenswerte Erscheinungsform einer jeden wäßrigen Polymerisatdispersion ist daher diejenige ihres bei Zusatz von Wasser redispergierenden Polymerisats.

Prinzipiell sind bei zusatz von Wasser redispergierbare Polymerisate durch Trocknung ihrer wäßrigen Polymerisatdispersionen zugänglich, wobei sie normalerweise in Pulverform anfallen. Beispiele für solche Trocknungsverfahren sind die Gefriertrocknung und die Sprühtrocknung. Letztere Methode, bei der die Polymerisatdispersion in einem Warmluftstrom versprüht und entwässert wird, ist insbesondere zweckmäßig zur Erzeugung großer Pulvermengen. Vorzugsweise werden die Trockenluft und die versprühte Dispersion dabei im Gleichstrom durch den Trockner geführt (vgl. z.B. EP-A 262 326 oder EP-A 407 889).

Während die Trocknung von Polymerisatlösungen normalerweise vollständig reversibel ist, besteht ein Nachteil von durch Trocknung wäßriger Polymerisatdispersionen erzeugten Polymerisatpulvern darin, daß ihre Redispergierbarkeit bei Zusatz von Wasser in der Regel insofern nicht voll zu befriedigen vermag, als die bei der Redispergierung resultierende Polymerisatteilchendurchmesserverteilung in der Regel von derjenigen in der wäßrigen Ausgangsdispersion (Primärteilchendurchmesserverteilung) verschieden ist.

Dieser Sachverhalt rührt daher, daß wäßrige Polymerisatdispersionen im Unterschied zu Polymerisatlösungen keine thermodynamisch stabilen Systeme bilden. Vielmehr versucht das System, die Grenzfläche Polymerisat/Dispergiermedium durch Vereinigung von kleinen Primärteilchen zu größeren Sekundärteilchen (z.B. Stippen, Koagulat) zu verkleinern, was im Zustand der dispersen Verteilung im wäßrigen Medium durch Zusatz von Dispergiermitteln für längere Zeit verhindert werden kann.

Ganz allgemein ausgedrückt, handelt es sich bei Dispergiermitteln um solche Substanzen, die die Grenzfläche "dispergiertes Polymerisat/wäßriges Dispergiermedium" zu stabilisieren vermögen. In der Regel handelt es sich um in Wasser lösliche Substanzen, deren Gesamtmenge sich in zwei Gruppen unterteilen läßt: a) Schutzkolloide; b) Emulgatoren. Letztere lassen sich wiederum unterscheiden in: a) anionische Emulgatoren; b) kationische Emulgatoren; c) nichtionische Emulgatoren. Die stabilisierende Wirkung von Schutzkolloiden ist in erster Linie auf eine sterische und/oder elektrostatische Abschirmung der dispergierten Polymerisatpartikel zurückzuführen, deren Einhüllende das Schutzkolloid bildet. Es handelt sich in der Regel um solche Substanzen, deren relatives Molekulargewicht oberhalb von 1500 liegt. Sie können an die dispergierten Polymerisatpartikel sowohl chemisch als auch nur physikalisch gebunden sein.

Die stabiliserende Wirkung von Emulgatoren, deren relatives Molekulargewicht in der Regel < 1500 beträgt, ist darauf zurückzuführen, daß sie infolge ihres amphiphilen Aufbaus (polarer Teil - unpolarer Teil) die Grenzflächenspannung der Grenzfläche Polymerisat/wäßriges Dispergiermedium zu reduzieren vermögen. Ist der polare Teil eine kationische Gruppe, spricht man von einem kationischen Emulgator. Handelt es sich bei dem polaren Teil um eine anionische Gruppe, handelt es sich um einen anionischen Emulgator. Im Fall eines nichtionischen polaren Teils spricht man von einem nichtionischen Emulgator. Im Unterschied zu Schutzkolloiden vermögen Emulgatoren in Wasser Micellen auszubilden. Sie sind ferner so beschaffen, daß sie bei Zusatz zu Wasser bei 25°C und 1 atm beim Erreichen der kritischen Micellbildungskonzentration dessen Oberflächenspannung in der Regel um wenigstens 25 % reduzieren. Als Gegenionen kommen bei anionischen Emulgatoren vor allem Alkalimetallionen, Erdalkalimetallionen und Ammoniumionen in Betracht. Bei kationischen Emulgatoren kommen vor allem das Hydroxidanion, Halogenidanionen und $NO_3^-$ in Betracht.

Die die disperse Phase von mittels kationischen Emulgatoren stabilisierten wäßrigen Polymerisatdispersionen bildenden Polymerisatteilchen weisen in entsprechender Weise eine positive Oberflächenladung auf. Mittels anionischer Emulgatoren stabilisierte wäßrige Polymerisatdispersionen enthalten Polymerisatteilchen mit negativer Oberflachenladung. Ebenso wie die Schutzkolloide, können auch die Emulgatoren sowohl chemisch als auch nur physikalisch an die dispergierten Polymerisatpartikel gebunden sein. Selbstverständlich können Schutzkolloide und Emulgatoren auch in Kombination zur Stabilisierung wäßriger Polymerisatdispersionen eingesetzt werden. Eine weitere Möglichkeit, die Oberfläche von in wäßrigem Medium dispergierten Polymerisatpartikeln mit elektrischen Ladungen zu versehen, besteht darin, in das Polymerisat ionisierbare Bausteine einzubauen. Darunter werden z.B. chemische Verbindungen verstanden, die, wie z.B. $\alpha,\beta$-monoethylenisch ungesättigte Carbonsäuren, durch Änderung des pH-Wertes des wäßrigen Dispergiermediums elektrische Ladungen auszubilden vermögen oder im Beisein von Wasser aus sich in Ionen dissoziieren. Handelt es sich bei der wäßrigen Polymerisatdispersion um eine solche, die durch radikalische wäßrige Emulsionspolymerisation von wenigstens eine ethylenisch ungesättigte Gruppe aufweisenden Monomeren unmittelbar in disperser Verteilung befindlich erzeugt wird (Primärdispersion), kann die Oberfläche der dispergierten Polymerisatpartikel auch vom radikalischen Polymerisationsinitiator herrührende positive oder negative elektrische Ladungen aufweisen. Eine weitere Ladungsquelle bilden entsprechende Molekulargewichtsregler (vgl. dazu z. B. JP-A 7/53728). Bei einer Sekundärdispersion eines Polymerisats wird das dispergierte Polymerisat in der Regel in Lösung erzeugt (z.B. durch radikalische Polymerisation, Polykondensation oder Polyaddition) und nachträglich in eine wäßrige Polymerisatdispersion überführt. Auch hier kann durch in an sich bekannter Weise erfolgende Auswahl von Initiator, Regler und, beim Überführen, Dispergiermittel, die gewünschte elektrische Oberflächenladung erzeugt werden.

Ob die in disperser Verteilung befindlichen Polymerisatteilchen einer wäßrigen Polymerisatdispersion eine negative oder eine positive Oberflächenladung aufweisen, kann in an sich bekannter Weise durch Untersuchung ihrer elektrophoretischen Beweglichkeit ermittelt werden. Die überwiegende Menge aller wäßrigen Polymerisatdispersionen weist Polymerisatpartikel mit anionischer Oberflächenladung auf (anionisch stabilisierte wäßrige Polymerisatdispersion). Sie sind dem Fachmann ebenso bekannt wie kationisch stabilisierte wäßrige Polymerisatdispersionen.

Im Rahmen der Trocknung wäßriger Polymerisatdispersionen reicht nun aber die Trennwirkung der Dispergiermittel häufig nicht mehr aus und es kommt in bestimmtem Umfang zu irreversibler Sekundärteilchenbildung. D.h., die Sekundärteilchen bleiben bei der Redispergierung als solche erhalten und mindern die anwendungstechnischen Eigenschaften der im Rahmen der Redispergierung erhältlichen wäßrigen Polymerisatdispersion.

Es ist nun seit längerem bekannt, daß es Stoffe gibt, deren Zusatz zu wäßrigen Polymerisatdispersionen das Erscheinungsbild irreversibler Sekundärteilchenbildung beim Trocknen reduziert. Diese Stoffe werden unter dem Oberbegriff Trocknungshilfsmittel zusammengefaßt. Sie sind vielfach insbesondere als Sprühhilfsmittel bekannt, da die Sprühtrocknung in besonderem Ausmaß die Ausbildung irreversibler Sekundärteilchen promoviert. Gleichzeitig mindern sie in der Regel die Ausbildung von an der Trocknerwand haften bleibendem Polymerbelag bei der Sprühtrocknung und bewirken so eine Erhöhung der Pulverausbeute.

Gemäß TIZ-Fachberichte, Vol. 109, No. 9, 1985, S. 698 ff. handelt es sich bei den bisher eingesetzten Trocknungshilfsmitteln um wasserlösliche Substanzen, die bei der Trocknung eine Matrix ausbilden, in die die wasserunlöslichen, von Dispergiermittel umgebenen Polymerisatprimärteilchen eingebettet werden. Die die Polymerisatprimärteilchen schützend umgebende Matrix wirkt einer irreversiblen Sekundärteilchenbildung entgegen. Es erfolgt so meist eine reversible Ausbildung von Sekundärteilchen (Agglomerate einer Größe von typisch 50 bis 250 µm), die zahlreiche, durch die Trockungshilfsmittelmatrix voneinander getrennte, Polymerisatprimärteilchen umfassen. Beim Redispergieren mit Wasser löst sich die Matrix wieder auf und die ursprünglichen, von Dispergiermittel umgebenen, Polymerisatprimärteilchen werden im wesentlichen wieder erhalten. Den reversibel ausgebildeten Sekundärteilchen werden vielfach noch feinteilige Antiblockmittel wie feinteiliges Quarzpulver zugesetzt, die als Abstandhalter zwischen den redispergierbaren Agglomeraten fungieren und z.B. ihrem Zusammenbacken beim Lagern unter der Druckwirkung ihres Eigengewichtes entgegenwirken.

Die DE-AS 22 38 903 und die EP-A 576 844 empfehlen die Verwendung von Poly-N-Vinylpyrrolidon als ein

solches Trocknungshilfsmittel. Die EP-A 78 449 empfiehlt Copolymerisate aus 20 bis 70 Gew.-% Vinylpyrrolidon und 30 bis 80 Gew.-% Vinylacetat, wasserlösliche Alkali- und/oder Erdalkalisalze eines Naphthalinsulfonsäure-Formaldehyd-Kondensats sowie deren Gemische als Trocknungshilfsmittel. Die EP-A 601 518 empfiehlt für anionisch stabilisierte wäßrige Polyacrylatdispersionen die Verwendung von Polyvinylalkohol als Trocknungshilfsmittel. Polyvinylalkohol wird auch von U. Rietz in Chemie u. Technologie makromolekularer Stoffe (FH-Texte FH Aachen) 53 (1987) 85 als Trocknungshilfsmittel für wäßrige Polymerisatdispersionen empfohlen.

Die EP-A 467 103 betrifft die Herstellung von in wäßrigem Medium redispergierbaren Polymerisatpulvern durch Sprühtrocknung anionisch stabilisierter wäßriger Polymerisatdispersionen nach Zusatz eines Copolymerisats aus 50 bis 80 mol-% einer olefinisch ungesättigten Mono- und/oder Dicarbonsäure und 20 bis 50 mol-% eines $C_3$- bis $C_{12}$-Alkens und/oder Styrol als Trocknungshilfsmittel. Die EP-A 629 650 empfiehlt die Verwendung von olefinisch ungesättigte Sulfonsäuren einpolymerisiert enthaltenden Polymerisaten als Sprühhilfsmittel bei der Sprühtrocknung anionisch stabilisierter wäßriger Polymerisatdispersionen.

Nachteilig an den Trocknungshilfsmitteln des Standes der Technik ist jedoch, daß sie bei der Trocknung wäßriger Polymerisatdispersionen nicht voll zu befriedigen vermögen. Insbesondere wird bei der Redispergierung in wäßrigem Medium die Durchmesserverteilung der Primärpolymerisatteilchen in der Regel nicht mehr erreicht (vgl. z. B. TIZ-Fachberichte, Vol. 109, No. 9, 1985, S. 699). Einen Indikator für diesen Sachverhalt bildet die bei Filterung der wäßrigen Redispergierung im Filter verbleibende Menge an Koagulat.

Die JP-A 7/53728 betrifft ein Verfahren zur Sprühtrocknung von ionisch stabilisierten wäßrigen Polymerisatdispersionen nach Zusatz einer wäßrigen Dispersion von, eine zur Oberflächenladung der dispergierten Polymerisatteilchen entgegengesetzte Oberflächenladung aufweisenden, in Wasser nicht löslichen feinteiligen anorganischen Partikeln als Trocknungshilfsmittel. Die eine entgegengesetzte Oberflächenladung aufweisenden feinteiligen anorganischen Partikel adsorbieren elektrisch auf der Oberfläche der dispergierten Polymerisatteilchen und bilden so bei der Trocknung der wäßrigen Polymerisatdispersion eine sowohl als die Redispergierbarkeit fördernd beschriebene, als auch eine in erster Linie antiblockend wirkende Schutzschicht. Während die antiblockende Wirkung beispielhaft belegt ist, gilt dies nicht für die Frage der Redispergierbarkeit. Nachteilig an der Verfahrensweise der JP-A 7/93728 ist, daß der Durchmesser der feinteiligen anorganischen Partikel zum Durchmesser der Polymerisatteilchen in einem bestimmten Verhältnis stehen muß. Dies bereitet insbesondere bei sehr feinteiligen zu trocknenden wäßrigen Polymerisatdispersionen sowie bei eine sehr breite Durchmesserverteilung aufweisenden wäßrigen Polymerisatdispersionen Probleme.

Die EP-A 262 326 betrifft ein spezielles Sprühtrocknungsverfahren für wäßrige Polymerisatdispersionen, das ohne Mitverwendung von Trocknungshilfsmitteln auszukommen versucht. Doch vermag auch diese Verfahrensweise hinsichtlich der Redispergierbarkeit des resultierenden Polymerisatpulvers nicht voll zu befriedigen.

Die Aufgabe der vorliegenden Erfindung bestand daher darin, ein Verfahren zur Herstellung von in wäßrigem Medium redispergierbaren Polymerisatpulvern durch Trocknung einer wäßrigen Polymerisatdispersion, deren in wäßrigem Medium dispergierte Polymerisatteilchen eine positive oder eine negative elektrische Oberflächenladung aufweisen, unter Zusatz eines Trocknungshilfsmittels zur Verfügung zu stehen, das die Nachteile der Verfahren des Standes der Technik nicht aufweist.

Demgemäß wurde ein Verfahren zur Herstellung von in wäßrigem Medium redispergierbaren Polymerisatpulvern durch Trocknung einer wäßrigen Polymerisatdispersion, deren in wäßrigem Medium dispergierte Polymerisatteilchen eine positive oder eine negative elektrische Oberflächenladung aufweisen, unter Zusatz eines Trocknungshilfsmittel gefunden, das dadurch gekennzeichnet ist, daß der zu trocknenden wäßrigen Polymerisatdispersion als Trocknungshilfsmittel ein Polyelektrolyt zugesetzt wird, der in seiner in ein Polyion und Gegenionen dissoziierten Form im wäßrigen Dispergiermedium löslich ist, wobei die elektrische Ladung des Polyions zu elektrischen Oberflächenladung der dispergierten Polymerisatteilchen entgegengesetzt ist.

Gemäß Römpp Chemie Lexikon Pl-S, Thieme Verlag, 9. Auflage (1992), S. 3526, sollen hier unter dem Begriff Polyelektrolyt Polymerisate mit in wäßrigem Medium ionisch dissoziierbaren Gruppen, die Bestandteil oder Substituent der Polymerisatkette sein können, verstanden werden, wobei die Anzahl der ionisch dissoziierbaren Gruppen so groß ist, daß die Polymerisate in der dissoziierten Form in Wasser vollständig löslich sind. D.h., ein Polyelektrolyt dissoziiert in wäßrigem Medium in ein Polyion und die entsprechenden Gegenionen. Im wesentlichen unterscheidet man zwei Gruppen von Polyelektrolyten, nämlich Polysäuren und Polybasen. Aus Polysäuren entstehen bei der Dissoziation unter Abspaltung von Protonen Polyanionen. Durch Zusatz von Basen ins wäßrige Medium kann die Dissoziation von Polysäuren in wäßrigem Medium gefördert werden. Dabei entstehen wäßrige Lösungen von Polysäuresalzen. D.h., typische Gegenionen von Polyanionen sind die Alkalimetallionen ($Na^{\oplus}$, $K^{\oplus}$, $Li^{\oplus}$, $Rb^{\oplus}$, $Cs^{\oplus}$), Erdalkalimetallionen (z.B. $Ca^{2\oplus}$, $Mg^{2\oplus}$), das $H^{\oplus}$, das $NH_4^{\oplus}$ sowie die Ammoniumionen von von $NH_3$ verschiedenen Stickstoffbasen (Aminen).

Polybasen enthalten als prä-ionische Gruppen z.B. solche, die in der Lage sind, durch Reaktionen mit Säuren unter Salzbildung Protonen aufzunehmen. Eine mögliche Alternative zur Protonierung bildet die Alkylierung. Typische Gegenionen von dabei resultierenden Polykationen sind die Halogenidionen ($Cl^{\ominus}$, $Br^{\ominus}$, $J^{\ominus}$), $CO_3^{2\ominus}$, $SO_4^{2\ominus}$, $CH_3$-$OSO_3^{\ominus}$ und $CH_3$-$CH_2$-$OSO_3^{\ominus}$. Polyionen (Kationen und Anionen) können sowohl anorganische als auch organische Polymere sein. Erfindungsgemäß bevorzugt sind Polyelektrolyte auf Basis von organischen Polymeren. Das zahlenmittlere Molekulargewicht von erfindungsgemäß geeigneten Polyelektrolyten kann z.B. 1000 bis $3 \cdot 10^6$ und mehr, aber auch 2000 bis $5 \cdot 10^5$ oder 5000 bis $10^5$ oder 7500 bis 50000 oder 10000 bis 25000 betragen.

Polyelektrolyte und ihre Herstellung sind dem Fachmann bekannt (vgl. z.B. US-A 3 205 187, US-A 4 038 233, EP-A 246 580, EP-A 544 158, EP-A 629 650, EP-A 467 103, Oosawa, Polyelektrolytes, New York: Marcel Dekker 1971, etc.).

Ihre Löslichkeit in Wasser liegt bei 25°C und 1 atm in der Regel bei ≥ 1 g pro 100 g Wasser, häufig bei ≥ 10 g pro 100 g Wasser und oft bei Werten ≥ 25 g pro 100 g Wasser.

In besonders einfacher Weise sind erfindungsgemäß zu verwendende Polyelektrolyte durch radikalische Polymerisation von wenigstens eine ethylenisch ungesättigte Gruppe aufweisenden Monomeren erhältlich. Wesentlich ist lediglich, daß wenigstens ein Teil der zu polymerisierenden Monomeren in wäßrigem Medium ionisch dissoziierbare Gruppen aufweist. In der Regel beträgt der Anteil der zu polymerisierenden Monomeren die in wäßrigem Medium ionisch dissoziierbare Gruppen aufweisen, bezogen auf die Gesamtmenge der zu polymerisierenden Monomeren, wenigstens 5 Gew.-%. Häufig beträgt dieser Anteil, in entsprechender Weise bezogen, wenigstens 10, oder wenigstens 20, oder wenigstens 40, vielfach wenigstens 60, oft wenigstens 80, aber auch 90 bis 100 Gew.-%.

Für polykationische Polyelektrolyte kommen dabei als in wäßrigem Medium ionisch dissoziierbare Gruppen aufweisende Monomere insbesondere solche in Betracht, die einen vierbindigen Stickstoff aufweisen (Quartärsalze).

Beispielhaft aufgeführt seien:

- Verbindungen der allgemeinen Formel (I)

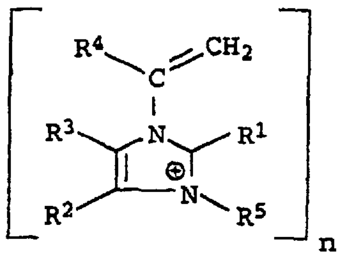

$An^{\ominus}$ (I),

mit

| | |
|---|---|
| $A^{n\ominus}$ | = $Cl^{\ominus}$, $Br^{\ominus}$, $J^{\ominus}$, $SO_4^{2\ominus}$, $CO_3^{2\ominus}$, $CH_3\text{-}OSO_3^{\ominus}$ oder $CH_3\text{-}CH_2\text{-}OSO_3^{\ominus}$, |
| $R^1$ bis $R^5$ = | unabhängig voneinander $C_1$- bis $C_{20}$-Alkyl, Benzyl oder H und |
| n = | 1 oder 2, |

- Verbindungen der allgemeinen Formel (II)

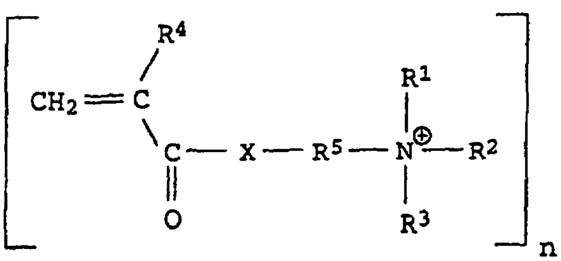

$Bn^{\ominus}$ (II),

mit

| | |
|---|---|
| X = | NH oder O, |
| $R^4$ = | H oder $C_1$- bis $C_{20}$-Alkyl, |
| $R^5$ = | $C_1$- $C_{20}$-Alkylen, |
| $R^1$, $R^2$, $R^3$ = | unabhängig voneinander $C_1$- bis $C_{20}$-Alkyl, |

$B^{n\ominus}$ = $Cl^{\ominus}$, $Br^{\ominus}$, $J^{\ominus}$, $SO_4^{2\ominus}$, $CO_3^{2\ominus}$, $CH_3\text{-}OSO_3^{\ominus}$ oder $CH_3\text{-}CH_2\text{-}OSO_3^{\ominus}$ und
n = 1 oder 2,

- Verbindungen der allgemeinen Formel (III)

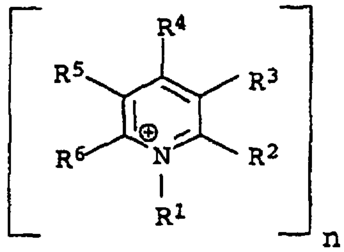

$C^{n\ominus}$ (III),

mit

$R^1$ bis $R^6$ = unabhängig voneinander H oder $C_1$- bis $C_{20}$-Alkyl, jedoch einer der Reste $R^1$ bis $R^6$ = $-CH=CH_2$,
$C^{n\ominus}$ = $Cl^{\ominus}$, $Br^{\ominus}$, $J^{\ominus}$, $SO_4^{2\ominus}$, $CO_3^{2\ominus}$, $CH_3\text{-}OSO_3^{\ominus}$ oder $CH_3\text{-}CH_2\text{-}OSO_3^{\ominus}$, und
n = 1 oder 2,

- Verbindungen'der allgemeinen Formel (IV)

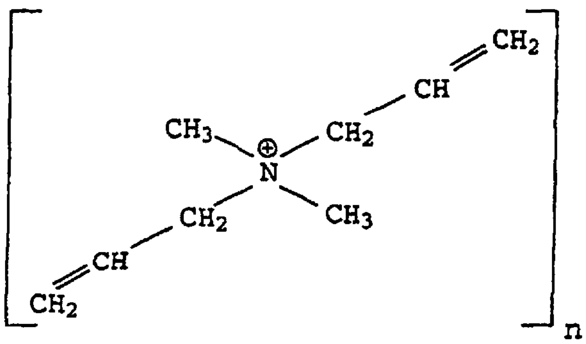

$D^{n\ominus}$ (IV),

mit

$D^{n\ominus}$ = $Cl^{\ominus}$, $Br^{\ominus}$, $J^{\ominus}$, $SO_4^{2\ominus}$, $CO_3^{2\ominus}$, $CH_3\text{-}OSO_3^{\ominus}$ oder $CH_3\text{-}CH_2\text{-}OSO_3^{\ominus}$ und
n = 1 oder 2.

Für polyanionische Polyelektrolyte seien als ionisch dissoziierbare Gruppen aufweisende Monomere beispielhaft aufgeführt:

- Salze (insbesondere die Alkalimetall- und Ammoniumsalze) von 3 bis 6 C-Atome aufweisenden $\alpha,\beta$-monoethylenisch ungesättigten Carbonsäuren,
- Vinylsulfonsäure und ihre Salze (insbesondere die Alkalimetall- und Ammoniumsalze),
- Verbindungen der allgemeinen Formel (V)

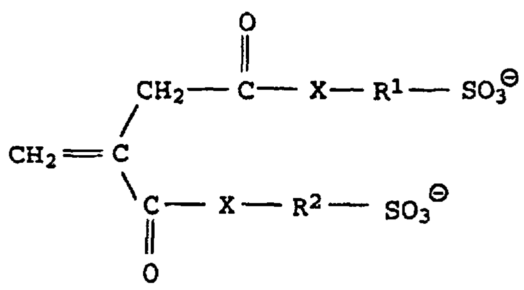

$2E^{\oplus}$ (V),

mit

$R^1$, $R^2$ = $C_1$- bis $C_{10}$-Alkylen,
X = O oder NH und,
$E^{\oplus}$ = Alkalimetallion, $NH_4^{\oplus}$ oder (Erdalkalimetallion)$_{1/2}$,

- Verbindungen der allgemeinen Formel (VI)

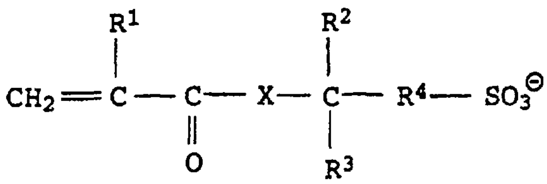

$F^{\oplus}$ (VI),

mit

$R^1$, $R^2$, $R^3$ = $C_1$- bis $C_3$-Alkyl,
$R^4$ = $C_1$- bis $C_5$-Alkylen,
X = O oder NH und
$F^{\oplus}$ = Alkalimetallion, $NH_4^{\oplus}$ oder (Erdalkalimetallion)$_{1/2}$,

- Verbindungen der allgemeinen Formel (VII) und (VIII)

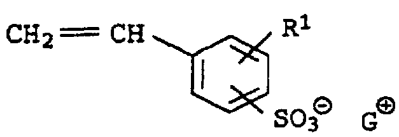

(VII),

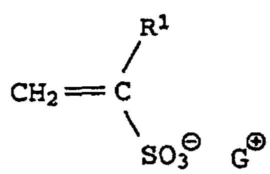

(VIII),

mit

$R^1$ = $C_1$- bis $C_5$-Alkyl,
$G^{\oplus}$ = Alkalimetallion, $NH_4^{\oplus}$ oder (Erdalkalimetallion)$_{1/2}$.

Ganz allgemein sind Salze von Sulfonsäuregruppen aufweisenden, wenigstens eine ethylenisch ungesättigte Gruppe enthaltenden Monomeren, besonders zur Herstellung polyanionischer Polyelektrolyte geeignet. Alkalimetallion steht insbesondere für $Li^{\oplus}$, $Na^{\oplus}$, $K^{\oplus}$, $Rb^{\oplus}$ und $Cs^{\oplus}$. Erdalkalimetallion steht vor allem für $Ca^{2\oplus}$ und $Mg^{2\oplus}$.

Als Comonomere der in wäßrigem Medium ionisch dissoziierbare Gruppen aufweisenden Monomeren kommen alle sonstigen wenigstens eine ethylenisch ungesättigte Gruppe aufweisenden Monomeren in Betracht. Sie sollen nachfolgend als nichtionische Monomere bezeichnet werden. Dies sind z.B. Monomere wie Olefine (insbesondere $C_3$- bis $C_{12}$-Alkene), z.B. Ethylen oder Propylen, vinylaromatische Monomere wie Styrol, α-Methylstyrol, o-Chlorstyrol oder Vinyltoluole, Ester aus Vinylalkohol und 1 bis 18 C-Atome aufweisenden Alkancarbonsäuren wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Monocarbonsäuren wie Acrylsäure und Methacrylsäure, mit im allgemeinen 1 bis 12, häufig 1 bis 8 und meist 1 bis 4 C-Atome aufweisenden Alkanolen wie insbesondere Acrylsäure- und Methacrylsäuremethyl-, -ethyl-, -n-butyl-, -iso-butyl-, -tert.-butylund -2-ethylhexylester, Di-Ester aus bis zu 6 C-Atome aufweisenden $\alpha,\beta$-monoethylenisch ungesättigten Dicarbonsäuren wie Fumarsäure, Itaconsäure und Maleinsäure mit im allgemeinen 1 bis 12, häufig 1 bis 8 und meist 1 bis 4 C-Atome aufweisenden Alkanolen wie Maleinsäuredimethylester oder Maleinsäuredi-n-butylester, die Nitrile und Amide der vorgenannten $\alpha,\beta$-monoethylenisch ungesättigten Carbonsäuren wie Acrylnitril und Acrylamid sowie $C_4$-$C_8$-konjugierte Diene wie 1,3-Butadien und Isopren. Geeignete Comonomere sind aber auch Vinylamide wie N-Vinylpyrrolidon, N-Vinylcaprolactam, N-Vinylformamid, N-Vinylacetamid oder N-Methyl-N-vinylacetamid, Hydroxyalkylacrylate und Hydroxyalkylmethacrylate mit 2 bis 4 C-Atomen im Hydroxyalkylrest wie Hydroxyethyl(meth)acrylat oder Hydroxypropyl(meth)acrylat, Polyethylenglykol(meth)acrylate mit 2 bis 50 Ethylenoxideinheiten, Allylester von 1 bis 18 C-Atome aufweisenden Alkancarbonsäuren sowie N-vinyllactame der allgemeinen Formel (IX)

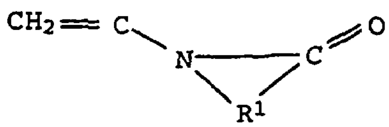

(IX),

mit $R^1$ = $C_3$- bis $C_8$-Alkylen.

Zweckmäßigerweise wird die radikalische Polymerisation zur Herstellung von erfindungsgemäß zu verwendenden Polyelektrolyten in Lösung durchgeführt. Als Lösungsmittel kommen z.B. Wasser, Methanol, Ethanol, iso-Propanol oder sonstige niedere Alkohole, aber auch andere organische Lösungsmittel in Betracht. Normalerweise wird in mit Wasser mischbaren Lösungsmitteln polymerisiert. In der Regel erfolgt die Polymerisation im Beisein von 0,1 bis 2 Gew.-%, bezogen auf die Menge der zu polymerisierenden Monomeren, an radikalbildenden Initiatoren. Die Polymerisationstemperatur beträgt häufig 40 bis 100°C.

Als radikalbildende Initiatoren können Peroxide wie z.B. Wasserstoffperoxid oder Peroxidischwefelsäure und ihre Salze (Alkalimetall- oder Ammoniumsalze), aber auch organische Peroxide wie tert.-Butylhydroperoxid, Dicyclohexylperoxidicarbonat, Dibenzoylperoxid, Dilauroylperoxid, tert.-Butylperpivalat und tert.-Butylper-2-ethylhexanoat in Betracht. Selbstverständlich können auch Azoverbindungen wie 2,2'-Azobis(2-methylbutyronitril), 2,2'-Azobisisobutyrodinitril, 2,2'-Azobis(2-amidinopropan)hydrochlorid und 2,2'-Azobis(2,4-dimethylvaleronitril) angewendet werden, oder Redoxinitiatorsysteme aus einem Peroxid und einem Reduktionsmittel wie Natriumformaldehydsulfoxylat. Die Wahl des Initiators richtet sich selbstredend u.a. nach der Polymerisationstemperatur. Das Molekulargewicht der Polyelektrolyte kann in an sich bekannter Weise durch Zugabe von das Molekulargewicht regelnden Substanzen gezielt eingestellt werden.

Als Regler kommen insbesondere niedere Alkohole in Betracht (die gleichzeitig als Lösungsmittel fungieren können). Als Regler für das Molekulargewicht können aber auch andere üblicherweise zu diesem Zweck eingesetzte Verbindungen wie Schwefelverbindungen, z.B. 2-Mercaptoethanol, Butylmercaptan, Dodecylmercaptan, Thioglykolsäure, Thioessigsäure, Thiomilchsäure oder Halogenverbindungen wie Tetrachlorkohlenstoff eingesetzt werden. In der Regel werden die zu polymerisierenden Monomeren dem Polymerisationsgefäß nach Maßgabe des Polymerisationsumsatzes, in der Regel im Lösungsmittel gelöst, kontinuierlich zugeführt.

Durch Trocknung der resultierenden Polyelektrolytlösungen können die Polyelektrolyte im Prinzip isoliert werden. Im Rahmen des erfindungsgemäßen Verfahrens können aber auch die Polyelektrolytlösungen als solche eingesetzt werden.

Wesentlich im Rahmen des erfindungsgemäßen Verfahren ist, daß die bei Zusatz eines polykationischen (polyanionischen) Polyelektrolyten zu einer anionisch (kationisch) stabilisierten wäßrigen Polymerisatdispersion üblicherweise eintretende Koagulation der Polymerisatdispersion umgangen wird. Dies gelingt dadurch, daß man nicht den Polyelektrolyten oder dessen Lösung in die wäßrige Polymerisatdispersion einrührt, sondern umgekehrt vorgeht und die wäßrige Polymerisatdispersion in eine Lösung des Polyelektrolyten einrührt (vgl. US-A 5 045 576, US-A 4 038 233, US-A 3 205 187 und EP-A 305 039). In der Regel ist es dabei erforderlich, daß die polyionische Gesamtladung der Polyelektrolytlösung die das entgegengesetzte Vorzeichen aufweisende Oberflächengesamtladung der Polymerisatpartikel in der wäßrigen Polymerisatdispersion mehr als zu neutralisieren vermag.

Eigene elektrophoretische Untersuchungen weisen aus, daß die Polyanionen (Polykationen) der Polyelektrolytlösung an einer kationischen (anionischen) Polymerisatteilchenoberfläche elektroadsorbieren und bei polyionischem Gesamtladungsüberschuß eine Ladungsumkehr der Polymerisatteilchenoberfläche bedingen. D.h., im Unterschied zu den konventionellen Trocknungshilfsmitteln des Standes der Technik läßt sich gemäß dem erfindungsgemäßen Verfahren bereits im Zustand der dispersen Verteilung im wäßrigen Medium um die anionisch (kationisch)

stabilisierten Polymerisatteilchen eine zweite, polykationische (polyanionische) Schutzschicht aufziehen, die bei Trocknung der wäßrigen Polymerisatdispersion einer irreversiblen Sekundärteilchenbildung entgegenwirkt und insbesondere infolge ihrer Wasserlöslichkeit nahezu perfekte Redispergierbarkeit in wäßrigem Medium bedingt. Durch mehrfaches aufeinanderfolgendes Umladen, unter Anwendung von Polyionen mit in der Umladungsabfolge alternierenden Vorzeichen ihrer ionischen Ladung, lassen sich in entsprechender Weise Schutzschichten der unterschiedlichsten Dicke erzeugen. Durch abschließende Anwendung der Verfahrensweise der JP-A 7/53728 (Aufbringen feinteiliger unlöslicher anorganischer Partikel auf die Polymerisatteilchenoberfläche) lassen sich bei abschließender Trocknung Polymerisatpulver erhalten, die gleichzeitig sowohl in hervorragender Weise in wäßrigem Medium redispergierbar als auch blockfest sind.

Durch elektrophoretische Untersuchung läßt sich die Ladungsumkehr auf der Polymerisatteilchenoberfläche detailliert verfolgen. Die Redispergierbarkeit ist in der Regel dann optimiert, wenn bezogen auf das dispergierte Polymerisat soviel an Polyelektrolyt zugesetzt wurde, daß die Ladungsumkehr auf der Polymerisatteilchenoberfläche gerade ihr Maximum erreicht.

In der Regel wird die erfindungsgemäße Trocknung durch Sprühtrocknung der wäßrigen Polymerisatdispersion bei einer Eingangstemperatur $T_E$ des Warmluftstroms von 100 bis 200°C, vorzugsweise 120 bis 160°C, und einer Ausgangstemperatur $T_A$ des Warmluftstroms von 30 bis 90°C, vorzugsweise 50 bis 70°C durchgeführt. Das Versprühen der wäßrigen Polymerisatdispersion im Warmluftstrom kann dabei z.B. mittels Ein- oder Mehrstoffdüsen oder über eine rotierende Scheibe erfolgen. Die Abscheidung der Polymerisatpulver erfolgt normalerweise unter Verwendung von Zyklonen oder Filterabscheidern. Die versprühte wäßrige Polymerisatdispersion und der Warmluftstrom werden vorzugsweise parallel geführt.

Vor diesem Hintergrund besteht eine Ausführungsform der vorliegenden Erfindung in der Verwendung solcher Polyelektrolyte als Trocknungshilfsmittel, zu deren Herstellung nichtionische Monomere einpolymerisiert werden, deren Homopolymerisate bei hohem Molekulargewicht eine Glasübergangstemperatur (midpoint temperature, ASTM D 3418-82) oberhalb von 50°C aufweisen.

Wie bereits erwähnt, kann sich das relative Molekulargewicht der erfindungsgemäß zu verwendenden Polyelektrolyte über einen weiten Bereich erstrecken. Ein Maß für das mittlere Molekulargewicht eines Polyelektrolyten ist dessen K-Wert bei 25°C in wäßriger Lösung. Der K-Wert ist eine relative Viskositätszahl, die in Analogie zur DIN 53 726 bestimmt wird. Er beinhaltet hier die Fließgeschwindigkeit des reinen Lösungsmittels relativ zur Fließgeschwindigkeit des eine definierte Menge Polyelektrolyt gelöst enthaltenden Lösungsmittels (vgl. auch Cellulosechemie, Vol. 13 (1932), S. 58-64, und Kirk-Othmer, Encyclopedia of Chemical Technology, vol. 23, S. 967-968). Ein hoher K-Wert entspricht dabei einem hohen mittleren Molekulargewicht.

Erfindungsgemäß geeignet sind z.B. solche Polyelektrolyte, deren K-Wert in 0,5 molarer wäßriger NaCl-Lösung als Lösungsmittel bei einem Polyelektrolytgehalt von 0,1 Gew.-% 20 bis 350, bevorzugt 30 bis 200 beträgt. Ferner sind solche Polyelektrolyte erfindungsgemäß geeignet, deren K-wert in Wasser als Lösungsmittel bei einem Polyelektrolytgehalt von 1 Gew.-% 15 bis 150, bevorzugt 25 bis 120 beträgt.

Ein Vorteil des erfindungsgemäßen Trocknungsverfahrens besteht darin, daß die Affinität zwischen Polymerisatteilchenoberfläche und Polyanion überwiegend auf elektrostatischer Wechselwirkung basiert. In entsprechender Weise ist das erfindungsgemäße Trocknungsverfahren im wesentlichen unabhängig von der chemischen Eigenart des dispergierten Polymerisats anwendbar. Dabei erweist es sich in der Regel als günstig, wenn die elektrischen Ladungsträger, die die disperse Verteilung der wäßrigen Polymerisatdispersion vorab des Polyelektrolytzusatzes mitstabilisieren, nicht nur physikalisch sondern auch chemisch an das dispergierte Polymerisat gebunden sind (z.B. chemische Bindung durch Pfropfung bei radikalischer wäßriger Emulsionspolymerisation auf ein kationisches oder anionisches Schutzkolloid). Ein anderer Vorteil des erfindungsgemäßen Trocknungsverfahrens besteht darin, daß der zuzusetzende Polyelektrolyt nicht auf den Durchmesser der in der wäßrigen Polymerisatdispersion dispergierten Polymerisatteilchen maßgeschneidert werden muß. Ein Maß für den mittleren Polymerisatteilchendurchmesser ist die bei 25°C bestimmte Lichtdurchlässigkeit der wäßrigen Polymerisatdispersion (LD-Wert, bestimmt im auf einen Feststoffgehalt von 0,01 Gew.-% verdünnten Zustand der wäßrigen Polymerisatdispersion, relativ zu reinem Wasser unter Anwendung von weißem Licht und bei einer Schichtdicke von 2,5 cm).

Prinzipiell ist das erfindungsgemäße Verfahren sowohl zur Trocknung von wäßrigen ionisch stabilisierten Polymerisat-Primärdispersionen als auch zur Trocknung von wäßrigen ionisch stabilisierten Polymerisat-Sekundärdispersionen anwendbar.

Als besonders günstig erweist sich die erfindungsgemäße Verfahrensweise im Fall der Trocknung von wäßrigen Polymerisatdispersionen, deren Verfilmungen Glasübergangstemperaturen ≤ 50°C oder ≤ 25°C oder ≤ 0°C beträgt. In der Regel wird die Glasübergangstemperatur der dispergierten Polymerisate ≥ -60°C oder ≥ -40°C oder ≥ -20°C betragen.

D.h., das erfindungsgemäße Verfahren eignet sich im Fall der Trocknung wäßriger Polymerisatdispersionen, deren dispergiertes Polymerisat in radikalisch polymerisierter Form zu

- 70 bis 100 Gew.-% aus Estern der Acryl- und/oder Methacrylsäure mit 1 bis 12 C-Atome aufweisenden Alkanolen und/oder Styrol,
  oder

- 70 bis 100 Gew.-% aus Styrol und/oder Butadien,
  oder

- 40 bis 100 Gew.-% aus Vinylchlorid und/oder Vinylidenchlorid,
  oder

- 40 bis 100 Gew.-% aus Vinylacetat, Vinylpropionat und/oder Ethylen

aufgebaut ist.

M.a.W. kommt das erfindungsgemäße Verfahren zur Trocknung ionisch mitstabilisierter wäßriger Polymerisatdispersionen in Betracht, deren dispergiertes Polymerisat in radikalisch polymerisierter Form aus wenigstens eine ethylenisch ungesättigte Gruppe aufweisenden Monomeren wie
Olefine, z.B. Ethylen, vinylaromatische Monomere wie Styrol, α-Methylstyrol, o-Chlorstyrol oder Vinyltoluole, Vinyl- und Vinylidenhalogenide wie Vinyl- und Vinylidenchlorid, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat sowie im Handel befindliche Monomere VEOVA® 9-11 (VEOVA X ist ein Handelsname der Firma Shell und steht für Vinylester von Carbonsäuren, die auch als Versatic® X-Säuren bezeichnet werden), Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methyacrylsäuremethyl-, -ethyl-, -n-butyl-, -iso-butyl- und -2-ethylhexylester, Maleinsäuredimethylester oder Maleinsäure-n-butylester, Nitrile α,β-monoethylenisch ungesättigter Carbonsäuren wie Acrylnitril sowie $C_{4-8}$-konjugierte Diene wie 1,3-Butadien und Isopren aufgebaut ist. Die genannten Monomeren bilden in der Regel die Hauptmonomeren, die, bezogen auf die Gesamtmenge der einpolymerisierten Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wäßrigen Polymerisatdispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, CarbonylGruppe oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate und -dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat. Neben ungesättigte Doppelbindungen aufweisenden Monomeren können in untergeordneten Mengen, üblicherweise 0,01 bis 2 Gew.-% bezogen auf die zu polymerisierenden Monomeren, das Molekulargewicht regelnde Substanzen wie tert.-Dodecylmercaptan sowie 3-Mercaptopropyltrimethoxysilan miteinpolymerisiert sein.

Insbesondere ist das erfindungsgemäße Verfahren anwendbar im Fall von zu trocknenden wäßrigen Polymerisatdispersionen, deren in disperser Verteilung befindliches Polymerisat in radikalisch polymerisierter Form aus

A) 80 bis 100 Gew.-% wenigstens eines Monomeren aus der Gruppe umfassend Styrol, α-Methylstyrol, Vinyltoluole, Ester aus 3 bis 6 C-Atome aufweisenden α,β-monoethylenisch ungesättigten Carbonsäuren und 1 bis 12 C-Atome aufweisenden Alkanolen, Butadien sowie Vinylund Allylester von 1 bis 12 C-Atome aufweisenden Alkancarbonsäuren und

B) 0 bis 20 Gew.-% sonstigen, wenigstens eine ethylenisch ungesättigte Gruppe aufweisenden Monomeren

aufgebaut ist. Mögliche Monomere A sind dabei z.B. n-Butylacrylat, 2-Ethylhexylacrylat, Methylmethacrylat und Styrol.

Mögliche Monomere B sind Acrylamid, Methacrylamid, Acrylsäure, Acrylnitril, Methacrylnitril, 2-Acrylamido-2-methylpropansulfonsäure, Vinylpyrrolidon, Hydroxyethylacrylat, Hydroxymethylacrylat, Hydroxypropylacrylat, Hydroxypropylmethacrylat, quaternisiertes Vinylimidazol, N,N-Dialkylaminoalkyl(meth)acrylate, N,N-Dialkylaminoalkyl (meth)acrylamide, Trialkylammoniumalkyl-(meth)acrylate und Trialkylammoniumalkyl(meth)acrylamide.

Als die disperse Verteilung stabilisierende Schutzkolloide und/oder Emulgatoren kommen z.B. alle diejenigen in Betracht, die in der DE-A 42 13 965 benannt sind. Desgleichen gilt für die Polymerisationsinitiatoren. Die Feststoffvolumenkonzentration der zu trocknenden wäßrigen Polymerisatdispersion wird im Rahmen des erfindungsgemäßen Verfahrens in der Regel 10 bis 75, häufig 20 bis 65, meist 30 bis 50 Vol.-%. bezogen auf das Volumen der wäßrigen Polymerisatdispersion, betragen.

Es sei abschließend darauf hingewiesen, daß im Rahmen der erfindungsgemäßen Verwendung neben dem erfindungsgemäß als Trocknungshilfsmittel zu verwendenden Polyelektrolyten zusätzlich an sich bekannte Trocknungshilfsmittel (z.B. Polyvinylalkohol, Polyvinylpyrrolidon, Naphthalinsulfonsäure-Formaldehyd-Kondensate, Phenolsulfonsäure-Formaldehyd-Kondensate, Homopolymerisate der 2-Acrylamido-2-methylpropansulfonsäure etc.) mitverwendet werden können. Desgleichen gilt für Antibackmittel wie hochdisperse Kieselsäure, die häufig im Rahmen der Sprühtrocknung mitverwendet werden (in der Regel separat zugedüst), um ein Zusammenbacken des Polymerisatpulvers bei der Lagerung zu verhindern.

Die bei Ausübung des erfindungsgemäßen Verfahrens resultierenden in wäßrigem Medium redispergierenden Polymerisatpulver eignen sich unter Zusatz von Wasser als Bindemittel in hydraulisch abbindenden Massen, Anstrichstoffen, Lacken, Klebstoffen, Beschichtungsmassen (insbesondere für Papier) und Kunstharzputzen, wie sie in der EP-A 629 650 beschrieben sind.

Ausführungsbeispiele

I. Herstellung von zu trocknenden anionisch stabilisierten wäßrigen Polymerisatdispersionen DA-DF
Allgemeine Herstellvorschrift:
Ein Gemisch aus

| | |
|---|---|
| 150 g | Wasser |
| 5,6 g | einer 20 gew.-%igen wäßrigen Lösung eines ethoxylierten p-Isooctylphenols (EO-Grad: 25), Emulgator, |
| 0,48 g | einer 35 gew.-%igen wäßrigen Lösung des Na-Salzes des Schwefelsäurehalbesters von ethoxyliertem p-Isooctylphenol (EO-Grad: 25), Emulgator, |
| 3,9 g | einer 10 gew.-%igen wäßrigen Ameisensäure-Lösung, |
| 1,7 g | Natriumhydrogencarbonat, pH-Puffer, und |
| 3,4 g | einer 20 gew.-%igen wäßrigen Polyacrylamid-Lösung, Schutzkolloid, |

wurde in ein Polymerisationsgefäß vorgelegt und auf 90°C erhitzt.
Anschließend wurden zu diesem Gemisch unter Aufrechterhaltung der 90°C zeitgleich beginnend, aber räumlich getrennt, ein Zulauf 1 (innerhalb von 2 h) und ein Zulauf 2 (innerhalb von 2,5 h) kontinuierlich zudosiert. Danach wurde das Reaktionsgemisch noch 120 min. bei 90°C gerührt und anschließend auf 60°C abgekühlt. Nach Zugabe einer Lösung von 1,1 g tert.-Butylhydroperoxid in 5,5 g Wasser wurde unter Beibehalt der 60°C innerhalb von 1 h eine Lösung von 0,6 g Natriumformaldehydsulfoxylat in 15 g Wasser kontinuierlich zugeführt und danach noch 0,5 h bei 60°C gerührt. 15 min. nach beendetem Rühren wurde auf 25°C abgekühlt und mit 3,5 g einer 10 gew.-%igen wäßrigen Ammoniak-Lösung neutralisiert. Schließlich wurde über ein Sieb mit einer Maschenweite von 250 µm filtriert. Nach der Filtration wurden der Feststoffgehalt, der LD-Wert und der pH-Wert des wäßrigen Dispergiermediums (Glaselektrode) bestimmt. Die erhaltenen Ergebnisse zeigt die Tabelle 1.

| Zulauf 1: eine wäßrige Emulsion aus | |
|---|---|
| 560 g<br>8,4 g<br>11,5 g<br><br>162,9 g | Monomerengemisch A bis F,<br>einer 20 gew.-%igen wäßrigen Lösung von ethoxyliertem p-Isooctylphenol (EO-Grad: 25), Emulgator,<br>einer 35 gew.-%igen wäßrigen Lösung des Na-Salzes des Schwefelsäurehalbesters von ethoxyliertem p-Isooctylphenol (EO-Grad: 25), Emulgator, und<br>Wasser. |
| Zulauf 2: | |
| 3,3 g<br>90 g | Natriumperoxodisulfat gelöst in<br>Wasser. |

Die Zusammensetzung der Monomerengemische A bis F weist ebenfalls die Tabelle 1 aus.

Tabelle 1

| Resultierende Dispersion | Monomerengemischzusammensetzung | Feststoffgehalt (Gew.-%) | LD-Wert | pH-Wert | Fox Tg (°C) |
|---|---|---|---|---|---|
| DA | 219,2 g n-BA; 252,0 g S; 11,2 g AM; 5,6 g MAM; | 55,3 | 8 | 8,7 | 7 |
| DB | 347,2 g n-BA; 196,0 g S; 11,2 g AM; 5,6 g MAM; | 55,6 | 9 | 8,2 | -6 |
| DC | 403,2 g EHA; 140,0 g S; 11,2 g AM; 5,6 g MAS; | 54,9 | 12 | 8,7 | -28 |
| DD | 291,2 g n-BA; 252 g S; 11,2 g AM; 5,6 g MAS; | 56,0 | 5 | 5,1 | 8 |
| DE | 291,2 g n-BA; 252 g S; 11,2 g AM; 5,6 g AS; | 56,0 | 5 | 5,1 | 8 |
| DF | 291,2 g n-BA; 292 g S; 11,2 g MAM; 5,6 g AS; | 55,4 | 17 | 4,8 | 6 |
| n-BA = n-Butylacrylat; AM = Acrylamid; EHA = 2-Ethylhexylacrylat;<br>AS = Acrylsäure; MAM = Methacrylamid; MAS = Methacrylsäure; S = Styrol; | | | | | |

$Tg^{Fox}$(°C) = Nach der Beziehung von Fox berechnete Glasübergangstemperatur des dispergierten Polymerisats. Nach Fox (T.G. Fox, Bull. Am. Phys. Soc. (Ser. II) 1, 123 [1956] und Ullmanns Encyklopädie der technischen Chemie, Bd. 19, 4. Auflage, Verlag Chemie, Weinheim (1980), S. 17, 18) gilt für die Glasübergangstemperatur von Mischpolymerisaten in guter Nährung

$$\frac{1}{Tg} = \frac{X^1}{Tg^1} + \frac{X^2}{Tg^2} + \cdots \frac{X^n}{Tg^n},$$

wobei $X^1$, $X^2$, ..., $X^n$ die Massenbrüche 1, 2, ..., n und $Tg^1$, $Tg^2$, ..., $Tg^n$ die Glasübergangstemperaturen der jeweils nur aus einem der Monomeren 1, 2, ..., n aufgebauten Polymeren in Grad Kelvin bedeuten. Letztere sind z.B. aus Ullmann's Encyclopedia of

Industrial Chemistry, VCH, Weinheim, Vol. A 21 (1992) S. 169 bekannt.

II. Herstellung von zu trocknenden anionisch stabilisierten wäßrigen Polymerisatdispersionen DG - DK

DG: Ein Gemisch aus

| | |
|---|---|
| 600 g<br>14 g | Wasser,<br>einer 20 gew.-%igen wäßrigen Lösung eines ethoxylierten Talgfettalkohols (EO-Grad: 18), Emulgator, |

(fortgesetzt)

| | |
|---|---|
| 9,8 g | einer 10 gew.-%igen wäßrigen Ameisensäurelösung |
| 4,2 g | Natriumhydrogencarbonat, pH-Puffer, und |
| 5 Gew.-% | eines Zulauf 1 |

wurde in ein Polymerisationsgefäß vorgelegt, auf 90°C erhitzt und anschließend mit 10 Gew.-% des Zulauf 2 versetzt. 15 min. danach wurden dem Gemisch unter Aufrechterhaltung der 90°C zeitgleich beginnend, jedoch räumlich getrennt, die Restmenge des Zulauf 1 (innerhalb von 2 h) und die Restmenge des Zulauf 2 (innerhalb von 2,5 h) kontinuierlich zugeführt. Danach wurde das Reaktionsgemisch unter Rühren noch 2 h bei 90°C gehalten und danach auf 60°C abgekühlt. Nach Zugabe einer Lösung von 2,8 g tert.-Butylhydroperoxid in 16,2 g Wasser wurde unter Beibehalt der 60°C innerhalb von 1 h noch eine Lösung von 2,8 g Natriumformaldehydsulfoxylat in 15 g Wasser kontinuierlich ins Polymerisationsgefäß zugeführt und danach noch 0,5 h bei 60°C gerührt. 15 min. später wurde auf 25°C abgekühlt und durch Zugabe von 56 g einer 10 gew.-%igen wäßrigen Natriumhydroxidlösung neutralisiert. Nach Filtration über ein Sieb mit einer Maschenweite von 250 µm wurde eine wäßrige Polymerisatdispersion DG mit einem Feststoffgehalt von 49,3 Gew.-%, einem LD-Wert von 5 und einem pH-Wert ihres wäßrigen Dispergiermediums von 8,6 erhalten. $Tg^{Fox}$ = 5°C.

| Zulauf 1: eine wäßrige Emulsion aus | |
|---|---|
| 770 g | n-Butylacrylat, |
| 588 g | Styrol, |
| 42 g | Methacrylsäure, |
| 63 g | einer 20 gew.-%igen wäßrigen Lösung von ethoxyliertem Talgfettalkohol (EO-Grad: 18), Emulgator, |
| 98 g | einer 30 gew.-%igen wäßrigen Lösung des Na-Salzes des Schwefelsäurehalbesters von ethoxyliertem Talgfettalkohol (EO-Grad: 30), Emulgator, |
| 33,6 g | einer 5 gew.-%igen wäßrigen Lösung einer Hydroxyethylcellulose (Brookfield-Viskosität bei 25°C und einem Feststoffgehalt von 5 Gew.-% = 150 cps), Schutzkolloid und |
| 313 g | Wasser. |
| Zulauf 2: | |
| 4,2 g | Natriumperoxodisulfat gelöst in |
| 300 g | Wasser. |

DH: Ein Gemisch aus

| | |
|---|---|
| 450 g | Wasser, |
| 16,0 g | einer 20 gew.-%igen wäßrigen Lösung eines ethoxylierten p-Isooctylphenols (EO-Grad: 25), Emulgator, |
| 1,4 g | einer 35 gew.-%igen wäßrigen Lösung des Na-Salzes des Schwefelsäurehalbesters von ethoxyliertem p-Isooctylphenol (EO-Grad: 25), Emulgator, |
| 11,2 g | einer 10 gew.-%igen wäßrigen Ameisensäure-Lösung und |
| 4,8 g | Natriumhydrogencarbonat, pH-Puffer, |

wurde in ein Polymerisationsgefäß vorgelegt und auf 90°C erhitzt. Anschließend wurden dem Polymerisationsgefäß unter Aufrechterhaltung der 90°C zeitgleich beginnend, aber räumlich getrennt, ein Zulauf 1 (innerhalb von 2 h) und ein Zulauf 2 (innerhalb von 25 h) kontinuierlich zugeführt. Anschließend wurde das Reaktionsgemisch 120 min bei 90°C gerührt und danach auf 60°C abgekühlt. Nach Zugabe einer Lösung von 3,2 g tert.-Butylhydroperoxid in 16,4 g Wasser wurde unter Beibehalt der 60°C dem Polymerisationsgefäß innerhalb von 1 h eine Lösung von 3,2 g Natriumformaldehydsulfoxylat in 15 g Wasser kontinuierlich zugeführt und danach noch 0,5 h bei 60°C gerührt. 15 min später wurde auf 25°C abgekühlt. Nach Filtration über ein Sieb mit einer Maschenweite von 250 µm wurde eine wäßrige Polymerisatdispersion DH mit einem Feststoffgehalt von 55,8 Gew.-%, einem LD-Wert von 18 und einem pH-Wert des wäßrigen Dispergiermediums von 3,5 erhalten. $Tg^{Fox}$ = 6°C.

| Zulauf 1: eine wäßrige Emulsion aus | |
|---|---|
| 832 g | n-Butylacrylat, |
| 720 g | Styrol, |
| 32 g | Hydroxyethylacrylat, |
| 16 g | Methacrylsäure, |
| 24,0 g | einer 20 gew.-%igen wäßrigen Lösung eines ethoxylierten p-Isooctylphenols (EO-Grad: 25), Emulgator, |
| 32,9 g | einer 35 gew.-%igen wäßrigen Lösung des Na-Salzes des Schwefelsäurehalbesters von ethoxyliertem p-Isooctylphenol (EO-Grad: 25), Emulgator, und |
| 442 g | Wasser. |
| Zulauf 2: | |
| 9,3 g | Natriumperoxodisulfat gelöst in |
| 300 g | Wasser. |

DI: Ein Gemisch aus

| | |
|---|---|
| 150 g | Wasser, |
| 5,6 g | einer 20 gew.-%igen wäßrigen Lösung von ethoxyliertem Talgfettalkohol (EO-Grad: 18), Emulgator, |
| 3,9 g | einer 10 gew.-%igen wäßrigen Ameisensäure-Lösung, |
| 1,7 g | Natriumhydrogencarbonat, pH-Puffer, und |
| 3,4 g | einer 20 gew.-%igen wäßrigen Lösung eines Polyacrylamids, Schutzkolloid, |

wurde in ein Polymerisatgefaß vorgelegt und auf 90°C erhitzt. Anschließend wurden dem Polymerisationsgefäß unter Aufrechterhaltung der 90°C zeitgleich beginnend, aber räumlich getrennt, ein Zulauf 1 (innerhalb von 2 h) und ein Zulauf 2 (innerhalb von 2,5 h) kontinuierlich zugeführt. Danach wurde das Reaktionsgemisch noch 120 min bei 90°C gerührt und anschließend auf 60°C abgekühlt. Nach Zugabe einer Lösung von 1,1 g tert.-Butylhydroperoxid in 5,5 g Wasser wurde dem Polymerisationsgefäß unter Beibehalt der 60°C innerhalb von 1 h eine Lösung von 1,1 g Natriumformaldehydsulfoxylat in 5 g Wasser zugegeben und anschließend das Reaktionsgemisch noch 0,5 h bei 60°C gerührt. 15 min später wurde auf 25°C abgekühlt. Nach Filtration über ein Sieb mit einer Maschenweite von 250 µm wurde eine wäßrige Polymerisatdispersion DI mit einem Feststoffgehalt von 55,1 Gew.-%, einem LD-Wert von 15 und einem pH-Wert ihres wäßrigen Dispergiermediums von 7,6 erhalten. $T_g^{Fox}$ = 5°C.

| Zulauf 1: eine wäßrige Emulsion aus | |
|---|---|
| 291,2 g | n-Butylacrylat, |
| 252,0 g | Styrol, |
| 16,8 g | Methacrylamid, |
| 19,6 g | einer 20 gew.-%igen wäßrigen Lösung des Na-Salzes des Schwefelsäurehalbesters von ethoxyliertem Talgfettalkohol (EO-Grad: 30), Emulgator, und |
| 156,2 g | Wasser. |
| Zulauf 2: eine Lösung von | |
| 3,2 g | Natriumperoxodisulfat in |
| 100 g | Wasser. |

DK: Wie DI, die Monomeren in Zulauf 1 bestanden jedoch aus

| | |
|---|---|
| 347,2 g | n-Butylacrylat, |
| 196,0 g | Styrol und |
| 16,8 g | Methacrylamid. |

Nach Filtration über ein Sieb mit einer Maschenweite von 250 µm wurde eine wäßrige Polymerisatdispersion DK mit einem Feststoffgehalt von 55,7 Gew.-%, einem LD-Wert von 47 und einem pH-Wert ihres

wäßrigen Dispergiermediums von 5,9 erhalten. $T_g^{Fox}$ = -8°C.

III. Herstellung von wäßrigen Lösungen von polykationischen Polyelektrolyten PI bis PIX

PI: Ein Gemisch aus
627 g Wasser und
10 Gew.-% Zulauf 1
wurde in ein Polymerisationsgefäß vorgelegt, auf 70°C erhitzt und mit jeweils 10 Gew.-% der Zuläufe 2 und 3 versetzt. 5 min später wurden unter Aufrechterhaltung der 70°C zeitgleich beginnend, aber räumlich getrennt, die Restmengen von Zulauf 1 (innerhalb von 1 h), Zulauf 2 (innerhalb von 1,5 h) und Zulauf 3 (innerhalb von 1,5 h) dem Polymerisationsgefäß kontinuierlich zugeführt. Danach wurde das Reaktionsgemisch 120 min bei 70°C gerührt und sodann auf Raumtemperatur abgekühlt und über einen 250-µm-Filter filtriert. Es wurde eine klare Lösung mit einem Feststoffgehalt von 19,8 Gew.-% und einem pH-Wert von 9,0 erhalten. K-Wert (1 Gew.-% in Wasser) = 93.

| Zulauf 1: | |
|---|---|
| 196 g<br>4 g | N-Vinylpyrrolidon und<br>Trimethylammoniumpropylmethacrylamidchlorid; |
| Zulauf 2: | |
| 4 g<br>101,7 g | tert.-Butylhydroperoxid gelöst in<br>Wasser; |
| Zulauf 3: | |
| 3,2 g<br>100 g | Natriumformaldehydsulfoxylat gelöst in<br>Wasser. |

PII: wie PI, Zulauf 1 bestand jedoch aus 192 g N-Vinylpyrrolidon und 8 g Trimethylammoniumpropylmethacrylamidchlorid. Die resultierende klare Lösung wies einen Feststoffgehalt von 19,7 Gew.-% und einen pH-Wert von 9,4 auf. K-Wert (1-Gew.-% in Wasser) = 92.

PIII: Wie in Beispiel 13 der EP-B 246 580 wurden in einem Polymerisationsgefäß 196 g Wasser, 106 ml Zulauf 1 und 5 ml Zulauf 2 vorgelegt und auf 65°C erwärmt. Anschließend wurden unter Aufrechterhaltung der 65°C die Restmenge von Zulauf 1 (innerhalb von 5 h) und die Restmenge an Zulauf 2 (innerhalb von 7 h) zeitgleich beginnend dem Polymerisationsgefäß kontinuierlich zugeführt und nach beendeter Zufuhr noch 1 h bei 65°C gerührt. Es wurde eine klare Lösung erhalten, K-Wert (1 Gew.-% in Wasser) = 71.

| Zulauf 1: | |
|---|---|
| 120 g<br>280 g<br>250 g<br>0,3 g | 3-Methyl-1-vinyl-imidazoliummethylsulfat,<br>Vinylpyrrolidon,<br>Wasser und<br>2-Mercaptoethanol, wobei der pH-Wert der wäßrigen Lösung mit konz. wäßr. Ammoniak auf 7,5 eingestellt wurde; |
| Zulauf 2: | |
| 2,4 g<br>75 g | 2,2'-Azobis-(2-amidinopropan)-hydrochlorid gelöst in<br>Wasser. |

PIV: Wie PIII: Zulauf 1 bestand jedoch aus

| | |
|---|---|
| 120 g<br>280 g<br>250 g<br>1 g | 3-Methyl-1-vinyl-imidazoliumchlorid,<br>Vinylpyrrolidon,<br>Wasser und<br>2-Mercaptoethanol, wobei der pH-Wert der wäßrigen Lösung mit konz. wäßr. Ammoniak auf 7,5 eingestellt wurde. |

Es wurde eine klare Lösung erhalten. K-Wert (1 Gew.-% in Wasser) = 78, K-Wert (0,5 M wäßrige NaCl-Lösung) = 40.

PV: Wie PIII: Zulauf 1 bestand jedoch aus

| | |
|---|---|
| 200 g | 3-Methyl-1-vinylimidazoliumchlorid, |
| 200 g | Vinylpyrrolidon, |
| 250 g | Wasser und |
| 1 g | 2-Mercaptoethanol, wobei der pH-Wert mit konz. wäßriger Ammoniaklösung auf einen pH-Wert von 7,5 eingestellt wurde; |

Es wurde eine klare Lösung erhalten. K-Wert (1 Gew.-% in Wasser) = 84.

PVI : In einem Polymerrisationsgefäß mit aufgesetztem Rückflußkülher wurden 600 g Wasser vorgelegt und unter Rühren im Stickstoffstrom auf 65°C erwärmt. Nach Erreichen dieser Temperatur wurden ein Zulauf 1 (während 4 h) und ein Zulauf 2 (während 5 h) zeitgleich beginnend unter Aufrechterhaltung der 65°C dem Polymerisationsgefäß kontinuierlich zugeführt. Anschließend wurde noch 2 h bei 65°C gerührt. Es wurde eine klare Lösung erhalten. K-Wert (1 Gew.-% in Wasser) = 91, K-Wert (0,5 M wäßrige NaCl-Lösung) = 56.

| Zulauf 1: | |
|---|---|
| 86 g | 3-Methyl-l-vinylimidazolium-methylsulfat, |
| 300 g | N-Vinylpyrrolidon, |
| 400 g | N-Vinylcaprolactam und |
| 500 g | Wasser. |
| Zulauf 2: | |
| 3,2 g | 2,2'-Azobis(2-amidinopropan)dihydrochlorid gelöst in 100 g Wasser. |

PVII: Wie PVI, jedoch wird der gesamte Zulauf 1 in die Vorlage gegeben und der Zulauf 2 wird innerhalb von 4 h kontinuierlich zugeführt.
Es wurde eine klare Lösung erhalten. K-Wert (1 Gew.-% in Wasser) = 85, K-Wert (0,5 M wäßrige NaCl-Lösung) = 41.

PVIII: Wie bei PVI, die Polymerisationstemperatur betrug jedoch 80°C und Zulauf 2 bestand aus 2,3 g 2,2'-Azobis(2-methylbutyronitril) in 140 g Methanol. Das Methanol wurde nach beendeter Polymerisation destillativ abgetrennt. K-Wert (1 Gew.-% in Wasser) = 77, K-Wert (0,5 M wäßrige NaCl-Lösung) = 34.

PIX: Wie PIII, Zulauf 1 bestand jedoch aus

| | |
|---|---|
| 380 g | 3-Methyl-1-vinylimidazoliumchlorid, |
| 20 g | Vinylpyrrolidon, |
| 250 g | Wasser und |
| 1 g | 2-Mercaptoethanol, wobei der pH-Wert der wäßrigen Lösung mit konz. wäßr. Ammoniak auf 7,5 eingestellt wurde. |

IV. Sprühtrocknung der wäßrigen Polymerisatdispersionen DA bis DK nach Zusatz von wäßrigen Polyelektrolytlösungen PI bis PIX und Vergleichsversuch

Zunächst wurde die jeweilige wäßrige Polymerisatdispersion DA bis DK auf einen Feststoffgehalt von 40 Gew.-%, die jeweilige wäßrige Polyelektrolytlösung PI bis PIX auf einen

Feststoffgehalt von 25 Gew.-% verdünnt. Als Vergleichstrocknungshilfsmittel VP wurde nach Bsp. 1 der EP-A 576 844 eine wäßrige 25 gew.-%ige Poly-N-Vinylpyrrolidonlösung erzeugt. Dann wurden auf einmal und unter kräftigem Rühren so viel der jeweiligen wäßrigen Polymerisatdispersion in die wäßrige Trocknungshilfsmittellösung gegeben, bis ein Gesamtfeststoffgehalt von 35 Gew.-% resultierte.

Die Sprühtrocknung der wäßrigen Gemische erfolgte in einem Minor-Labortrockner der Fa. GEA Wiegand GmbH (Geschäftsbereich Niro), DE, mit Zweistoffdüsen (Durchmesser der Düse 0,8 bis 2 mm) - oder Scheibenzerstäubung bei einer Turm-Eingangstemperatur von 130°C und einer -Ausgangstemperatur von 60°C (Leistung: ca. 2 kg Sprühspeise/h). Als AntiBlockmittel wurden gleichzeitig mit der Sprühspeise ca. 2,5 Gew.-% (bezogen auf feste

Polymerisat-Mischung) einer feinteiligen Kieselsäure (mittlerer Korngrößtdurchmesser: 25 µm) in die Trocknungskammer zudosiert.

Zur Überprüfung der Redispergierbarkeit der erhaltenen Polymerisatpulver wurde wie folgt vorgegangen:

In eine Glasflasche wurden 90 g Wasser eingewogen und bei 25°C mit 10 g Polymerisatpulver versetzt. Das Gemisch wurde mit einem Ultra-Turrax 1 der Fa. Janke & Kunkel, IKA-Labortechnik, Staufen DE, 1 min bei 9500 U/min gerührt und in einen Meßzylinder gefüllt. Anschließend wurde der mit einem Kunststoffstopfen verschlossene Meßzylinder bei 25°C 72 h unbewegt gelagert. Danach wurde die Redispersion gut geschüttelt und über ein 72-µm-Sieb filtriert. Das den Filterkuchen enthaltende Sieb wurde bei 80°C 12 h im Trockenschrank gelagert und anschließend durch Wägung der prozentuale Gewichtsanteil des getrockneten Koagulats, bezogen auf eingesetzte Pulvermenge (10 g), bestimmt. Die Ergebnisse zeigt die Tabelle 2. Tabelle 2 weist auch aus, wieviel Trocknungshilfsmittel, in Gew.-% und bezogen auf dispergiertes Polymerisat, zugesetzt worden sind (trocken gerechnet).

Tabelle 2

| Sprühgetrocknetes Gemisch | | | | |
|---|---|---|---|---|
| Dispersion | Sprühhilfsmittel | | Zerstäubung | Koagulat |
| DA | PIII | 15 Gew.-% | Düse 1,5 | 1,2 Gew.-% |
| DA | PVIII | 15 Gew.-% | Düse 1,5 | 0,8 Gew.-% |
| DA | PVII | 15 Gew.-% | Düse 1,5 | 1,0 Gew.-% |
| DA | PVI | 15 Gew.-% | Düse 1,5 | 2,2 Gew.-% |
| DA | PIV | 5 Gew.-% | Düse 0,8 | 0,6 Gew.-% |
| DA | PIV | 10 Gew.-% | Düse 0,8 | 0,4 Gew.-% |
| DA | PIV | 15 Gew.-% | Düse 1,5 | 0,5 Gew.-% |
| DA | PV | 15 Gew.-% | Düse 1,3 | 0,3 Gew.-% |
| DA | PIX | 15 Gew.-% | Düse 1,3 | 0,7 Gew.-% |
| DB | PIV | 15 Gew.-% | Düse 1,3 | 0,8 Gew.-% |
| DC | PIV | 15 Gew.-% | Düse 1,3 | 0,8 Gew.-% |
| DD | PIV | 15 Gew.-% | Düse 0,8 | 0,4 Gew.-% |
| DD | PI | 10 Gew.-% | Scheibe | 1,0 Gew.-% |
| DD | PII | 10 Gew.-% | Scheibe | 0,9 Gew.-% |
| DE | PIV | 15 Gew.-% | Düse 0,8 | 0,5 Gew.-% |
| DF | PIV | 15 Gew.-% | Düse 0,8 | 0,2 Gew.-% |
| DG | PIV | 15 Gew.-% | Düse 0,8 | 0,9 Gew.-% |
| DG | PI | 10 Gew.-% | Scheibe | 1,0 Gew.-% |
| DG | PII | 10 Gew.-% | Scheibe | 1,1 Gew.-% |
| DH | PIV | 15 Gew.-% | Düse 0,8 | 2,0 Gew.-% |
| DI | PIV | 15 Gew.-% | Düse 2,0 | 0,2 Gew.-% |
| DK | PIV | 15 Gew.-% | Düse 1,5 | 0,5 Gew.-% |
| DA | VP | 15 Gew.-% | Düse 1,5 | 4,0 Gew.-% |
| *) Die Zahl hinter Düse gibt deren Durchmesser in mm an. | | | | |

**Patentansprüche**

1. Verfahren zur Herstellung von in wäßrigem Medium redispergierbaren Polymerisatpulver durch Trocknung einer wäßrigen Polymerisatdispersion, deren in wäßrigem Medium dispergierte Polymerisatteilchen eine positive oder eine negative elektrische Oberflächenladung aufweisen, unter Zusatz von Trocknungshilfsmittel, **dadurch gekennzeichnet, daß** der zu trocknenden wäßrigen Polymerisatdispersion als ein Trocknungshilfsmittel ein Polyelektrolyt zugesetzt wird, der in seiner in ein Polyion und Gegenionen dissoziierten Form im wäßrigen Dispergiermedium löslich ist, wobei die elektrische Ladung des Polyions zur elektrischen Oberflächenladung der dispergierten Polymerisatteilchen entgegengesetzt ist.

2. Verfahren nach Anspruch 1, **dadurch gekennzeichnet, daß** die dispergierten Polymerisatteilchen eine positive Oberflächenladung aufweisen.

3. Verfahren nach Anspruch 1, **dadurch gekennzeichnet, daß** die dispergierten Polymerisatteilchen eine negative Oberflächenladung aufweisen.

4. Verfahren nach einem der Ansprüche 1 bis 3, **dadurch gekennzeichnet, daß** das zahlenmittlere Molekulargewicht des Polyelektrolyten 1000 bis $3.10^6$ beträgt.

5. Verfahren nach einem der Ansprüche 1 bis 4, **dadurch gekennzeichnet, daß** das Polyion des verwendeten Polyelektrolyten ein organisches Polymer ist.

6. Verfahren nach einem der Ansprüche 1 bis 5, **dadurch gekennzeichnet, daß** die Löslichkeit des verwendeten Polyelektrolyten in Wasser bei 25°C und 1 atm ≥ 1 g pro 100 g Wasser beträgt.

7. Verfahren nach einem der Ansprüche 1 bis 6, **dadurch gekennzeichnet, daß** der verwendete Polyelektrolyt durch radikalische Polymerisation von wenigstens eine ethylenisch ungesättigte Gruppe aufweisenden Monomeren erhältlich ist, die wenigstens ein Monomer umfassen, das in wäßrigem Medium ionisch dissoziierbare Gruppen aufweist.

8. Verfahren nach Anspruch 7, **dadurch gekennzeichnet, daß** der verwendete Polyelektrolyt als wenigstens ein in wäßrigem Medium dissoziierbare Gruppen aufweisendes Monomeres eine Verbindung der allgemeinen Formel (I)

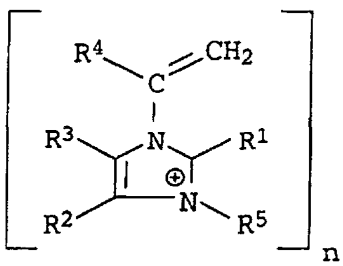

$A^{n\ominus}$ (I),

mit

| | |
|---|---|
| $A^{n\ominus}$ = | $Cl^{\ominus}$, $Br^{\ominus}$, $J^{\ominus}$, $SO_4^{2\ominus}$, $CO_3^{2\ominus}$, $CH_3\text{-}OSO_3^{\ominus}$ oder $CH_3\text{-}CH_2\text{-}OSO_3^{\ominus}$, |
| $R^1$ bis $R^5$ = | unabhängig voneinander $C_1$- bis $C_{20}$-Alkyl, Benzyl oder H und |
| n = | 1 oder 2, |

einpolymerisiert enthält.

9. Verfahren nach Anspruch 7, **dadurch gekennzeichnet, daß** der verwendete Polyelektrolyt als wenigstens ein in wäßrigem Medium dissoziierbare Gruppen aufweisendes Monomeres eine Verbindung der allgemeinen Formel (II)

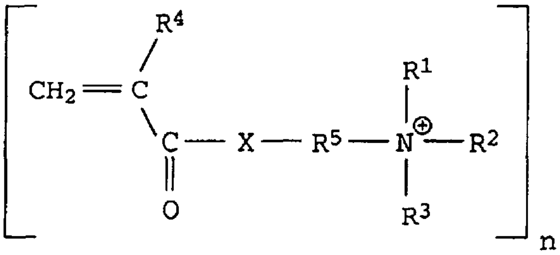

$B^{n\ominus}$ (II),

mit

| | |
|---|---|
| X = | NH oder O, |
| $R^4$ = | H oder $C_1$- bis $C_{20}$-Alkyl, |
| $R^5$ = | $C_1$- $C_{20}$-Alkylen, |
| $R^1$, $R^2$, $R^3$ = | unabhängig voneinander $C_1$- bis $C_{20}$-Alkyl, |
| $B^{n\ominus}$ = | $Cl^{\ominus}$, $Br^{\ominus}$, $J^{\ominus}$, $SO_4^{2\ominus}$, $CO_3^{2\ominus}$, $CH_3$-$OSO_3^{\ominus}$ oder $CH_3$-$CH_2$-$OSO_3^{\ominus}$, und |
| n = | 1 oder 2, |

einpolymerisiert enthält.

**10.** Verfahren nach Anspruch 7, **dadurch gekennzeichnet, daß** der verwendete Polyelektrolyt als wenigstens ein in wäßrigem Medium dissoziierbare Gruppen aufweisendes Monomeres eine Verbindung der allgemeinen Formel (III)

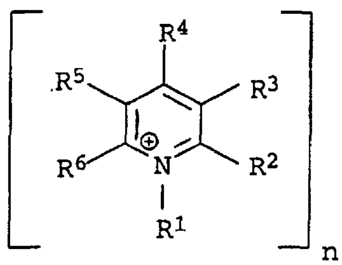

$C^{n\ominus}$ (III).

mit

| | |
|---|---|
| $R^1$ bis $R^6$ = | unabhängig voneinander H oder $C_1$- bis $C_{20}$-Alkyl, jedoch einer der Reste $R^1$ bis $R^6$ = $-CH=CH_2$, |
| $C^{n\ominus}$ = | $Cl^{\ominus}$, $Br^{\ominus}$, $J^{\ominus}$, $SO_4^{2\ominus}$, $CO_3^{2\ominus}$, $CH_3$-$OSO_3^{\ominus}$ oder $CH_3$-$CH_2$-$OSO_3^{\ominus}$, und |
| n = | 1 oder 2, |

einpolymerisiert enthält.

**11.** Verfahren nach Anspruch 7, **dadurch gekennzeichnet, daß** der verwendete Polyelektrolyt als wenigstens ein in wäßrigem Medium dissoziierbare Gruppen aufweisendes Monomeres eine Verbindung der allgemeinen Formel (IV)

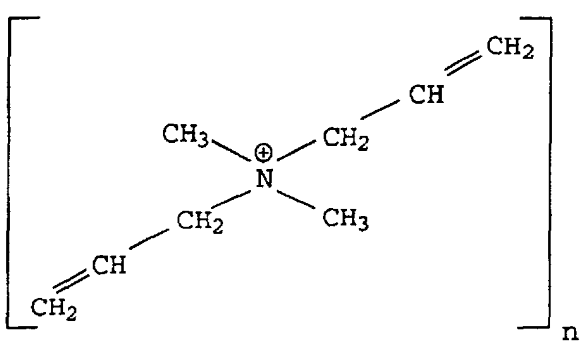

$D^{n\ominus}$ (IV),

mit

| | |
|---|---|
| $D^{n\ominus}$ = | $Cl^{\ominus}$, $Br^{\ominus}$, $J^{\ominus}$, $SO_4^{2\ominus}$, $CO_3^{2\ominus}$, $CH_3$-$OSO_3^{\ominus}$ oder $CH_3$-$CH_2$-$OSO_3^{\ominus}$ und |
| n = | 1 oder 2, |

einpolymerisiert enthält.

**12.** Verfahren nach Anspruch 7, **dadurch gekennzeichnet, daß** der verwendete Polyelektrolyt als wenigstens ein in wäßrigem Medium dissoziierbare Gruppen aufweisendes Monomeres ein Salz einer 3 bis 6 C-Atome aufweisenden α,β-monoethylenisch ungesättigten Carbonsäure einpolymerisiert enthält.

**13.** Verfahren nach Anspruch 7, **dadurch gekennzeichnet, daß** der verwendete Polyelektrolyt als wenigstens ein in wäßrigem Medium dissoziierbare Gruppen aufweisendes Monomeres Vinylsulfonsäure und/oder eines ihrer Salze einpolymerisiert enthält.

**14.** Verfahren nach Anspruch 7, **dadurch gekennzeichnet, daß** der verwendete Polyelektrolyt als wenigstens ein in wäßrigem Medium dissoziierbare Gruppen aufweisendes Monomeres eine Verbindung der allgemeinen Formel (V)

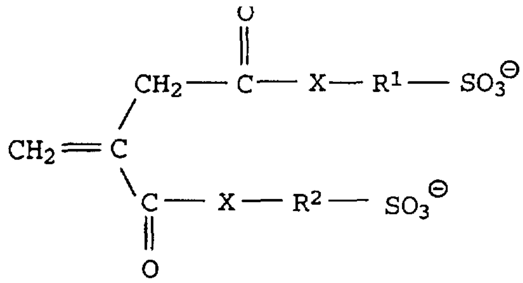

$2E^{\oplus}$ (V),

mit

$R^1$, $R^2$ = $C_1$- bis $C_{10}$-Alkylen,
X = O oder NH und,
$E^{\oplus}$ = Alkalimetallion, $NH_4^{\oplus}$ oder $(\text{Erdalkalimetallion})_{1/2}$,

einpolymerisiert enthält.

**15.** Verfahren nach Anspruch 7, **dadurch gekennzeichnet, daß** der verwendete Polyelektrolyt als wenigstens ein in wäßrigem Medium dissoziierbare Gruppen aufweisendes Monomeres eine Verbindung der allgemeinen Formel (VI)

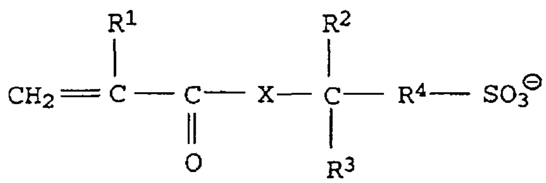

$F^{\oplus}$ (VI),

mit

$R^1$, $R^2$, $R^3$ = $C_1$- bis $C_3$-Alkyl,
$R^4$ = $C_1$- bis $C_5$-Alkylen,
X = O oder NH und
$F^{\oplus}$ = Alkalimetallion, $NH_4^{\oplus}$ oder $(\text{Erdalkalimetallion})_{1/2}$,

einpolymerisiert enthält.

**16.** Verfahren nach Anspruch 7, **dadurch gekennzeichnet, daß** der verwendete Polyelektrolyt als wenigstens ein in wäßrigem Medium dissoziierbare Gruppen aufweisendes Monomeres eine Verbindung der allgemeinen Formel (VII) und/oder (VIII)

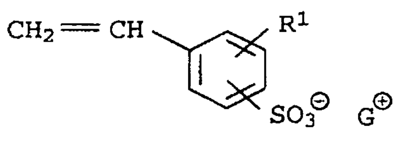 (VII), 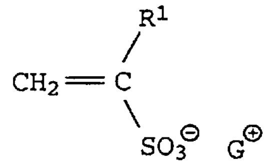 (VIII),

mit

$R^1$ = $C_1$- bis $C_5$-Alkyl,
$G^{\oplus}$ = Alkalimetallion, $NH_4^{\oplus}$ oder (Erdalkalimetallion)$_{1/2}$,

einpolymerisiert enthält.

**17.** Verfahren nach einem der Ansprüche 7 bis 16, **dadurch gekennzeichnet, daß** der Polyelektrolyt 5 bis 100 % seines Gewichtes wenigstens eines in wäßrigem Medium ionisch dissoziierbare Gruppen aufweisenden ethylenisch ungesättigten Monomeren einpolymerisiert enthält.

**18.** Verfahren nach einem der Ansprüche 7 bis 16, **dadurch gekennzeichnet, daß** der Polyelektrolyt 20 bis 100 % seines Gewichtes wenigstens eines in wäßrigem Medium ionisch dissoziierbare Gruppen aufweisenden ethylenisch ungesättigten Monomeren einpolymerisiert enthält.

**19.** Verfahren nach einem der Ansprüche 7 bis 16, **dadurch gekennzeichnet, daß** der Polyelektrolyt 40 bis 100 % seines Gewichtes wenigstens eines in wäßrigem Medium ionisch dissoziierbare Gruppen aufweisenden ethylenisch ungesättigten Monomeren einpolymerisiert enthält.

**20.** Verfahren nach einem der Ansprüche 1 bis 19, **dadurch gekennzeichnet, daß** das in der wäßrigen Polymerisatdispersion dispergierte Polymerisat zu 70 bis 100 Gew.-% aus Estern der Acryl- und/oder Methacrylsäure mit 1 bis 12 C-Atome aufweisenden Alkanolen und/oder Styrol in radikalisch polymerisierter Form aufgebaut ist.

**21.** Verfahren nach einem der Ansprüche 1 bis 19, **dadurch gekennzeichnet, daß** das in der wäßrigen Polymerisatdispersion dispergierte Polymerisat zu 70 bis 100 Gew.-% aus Styrol und/oder Butadien in radikalisch polymerisierter Form aufgebaut ist.

**22.** Verfahren nach einem der Ansprüche 1 bis 19, **dadurch gekennzeichnet, daß** das in der wäßrigen Polymerisatdispersion dispergierte Polymerisat zu 40 bis 100 Gew.-% aus Vinylchlorid und/oder Vinylidenchlorid in radikalisch polymerisierter Form aufgebaut ist.

**23.** Verfahren nach einem der Ansprüche 1 bis 19, **dadurch gekennzeichnet, daß** das in der wäßrigen Polymerisatdispersion dispergierte Polymerisat zu 40 bis 100 Gew.-% aus Vinylacetat, Vinylpropionat und/oder Ethylen in radikalisch polymerisierter Form aufgebaut ist.

**24.** Verfahren nach einem der Ansprüche 1 bis 23, **dadurch gekennzeichnet, daß** die Glasübergangstemperatur des in der wäßrigen Polymerisatdispersion dispergierten Polymerisats $\leq 50°C$ beträgt.

**25.** Verfahren nach einem der Ansprüche 1 bis 23, **dadurch gekennzeichnet, daß** die Glasübergangstemperatur des in der wäßrigen Polymerisatdispersion dispergierten Polymerisats $\leq 25°C$ beträgt.

**26.** Verfahren nach einem der Ansprüche 1 bis 25, **dadurch gekennzeichnet, daß** die Trocknung nach dem Verfahren der Sprühtrocknung erfolgt.

**27.** Verfahren nach Anspruch 26, **dadurch gekennzeichnet, daß** die Eingangstemperatur des Warmluftstroms 100 bis 200°C und die Ausgangstemperatur des Warmluftstroms 30 bis 90°C beträgt.

**28.** Polymerisatpulver, erhältlich nach einem Verfahren gemäß einem der Ansprüche 1 bis 27.

**29.** In wäßrigem Medium redispergierbares Polymerisatpulver, enthaltend kugelförmige Polymerisatteilchen mit einer

positiven oder mit einer negativen elektrischen Oberflächenladung und einen Polyelektrolyten, dessen Polyion eine zur elektrischen Oberflächenladung der kugelförmigen Polymerisatteilchen entgegengesetzte elektrische Ladung aufweist.

**30.** Verwendung von Polymerisatpulver gemäß Anspruch 28 oder 29 unter Zusatz von Wasser als Bindemittel in hydraulisch abbindenden Massen, Anstrichstoffen, Lacken, Klebstoffen, Beschichtungsmassen und Kunstharzputzen.

**31.** Verwendung eines Polyelektrolyten als Hilfsmittel bei der Sprühtrocknung wäßriger Polymerisatdispersionen, deren dispergierte Polymerisatteilchen eine positive oder eine negative elektrische Oberflächenladung aufweisen, wobei die Ladung des Polyions des Polyelektrolyten zur Oberflächenladung der dispergierten Polymerisatteilchen entgegengesetzt ist.

**32.** Verwendung einer wäßrigen Polymerisatdispersion, deren dispergierte Polymerisatteilchen eine positive oder eine negative elektrische Oberflächenladung aufweisen, nach Zusatz eines Polyelektrolyten mit einem zur Oberflächenladung der dispergierten Polymerisatteilchen entgegengesetzt geladenen Polyion, zur Herstellung eines in wäßrigem Medium redispergierbaren Polymerisatpulvers.

## Claims

**1.** A process for the preparation of polymer powders, which are redispersible in an aqueous medium, by drying an aqueous polymer dispersion whose polymer particles dispersed in the aqueous medium have a positive or a negative electric surface charge, with the addition of a drying assistant, wherein a polyelectrolyte which, in its form dissociated into a polyion and opposite ions, is soluble in the aqueous dispersing medium is added as a drying assistant to the aqueous polymer dispersion to be dried, the electric charge of the polyion being opposite to the electric surface charge of the dispersed polymer particles.

**2.** A process as claimed in claim 1, wherein the disperse polymer particles have a positive surface charge.

**3.** A process as claimed in claim 1, wherein the disperse polymer particles have a negative surface charge.

**4.** A process as claimed in any of claims 1 to 3, wherein the number average molecular weight of the polyelectrolyte is from 1000 to $3 \cdot 10^6$.

**5.** A process as claimed in any of claims 1 to 4, wherein the polyion of the polyelectrolyte used is an organic polymer.

**6.** A process as claimed in any of claims 1 to 5, wherein the water solubility at 25°C and 1 atm of the polyelectrolyte used is ≥ 1 g per 100 g of water.

**7.** A process as claimed in any of claims 1 to 6, wherein the polyelectrolyte used is obtainable by free radical polymerization of monomers which have at least one ethylenically unsaturated group and comprise at least one monomer which has groups which can undergo ionic dissociation in an aqueous medium.

**8.** A process as claimed in claim 7, wherein the polyelectrolyte used contains, as at least one monomer having groups which can undergo dissociation in an aqueous medium, a compound of the formula (I)

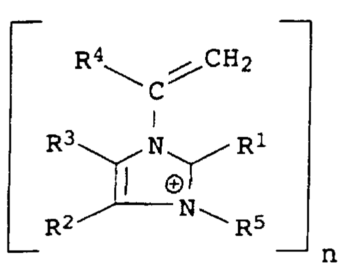

$A^{n\ominus}$ (I),

where

| | |
|---|---|
| $A^{n\ominus}$ | is $Cl^{\ominus}$, $Br^{\ominus}$, $I^{\ominus}$, $SO_4^{2\ominus}$, $CO_3^{2\ominus}$, $CH_3\text{-}OSO_3^{\ominus}$ or $CH_3\text{-}CH_2\text{-}OSO_3^{\ominus}$, |
| $R^1$ to $R^5$, | independently of one another, are each $C_1$-$C_{20}$-alkyl, benzyl or H and |
| n | is 1 or 2, |

in the form of polymerized units.

**9.** A process as claimed in claim 7, wherein the polyelectrolyte used contains, as at least one monomer having groups which can undergo dissociation in an aqueous medium, a compound of the formula (II)

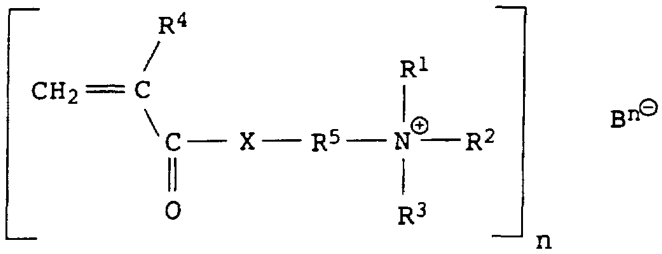

(II),

where

| | |
|---|---|
| X | is NH or O, |
| $R^4$ | is H or $C_1$-$C_{20}$-alkyl, |
| $R^5$ | is $C_1$-$C_{20}$-alkylene, |
| $R^1$, $R^2$ and $R^3$, | independently of one another, are each $C_1$-$C_{20}$-alkyl, |
| $B^{n\ominus}$ | is $Cl^{\ominus}$, $Br^{\ominus}$, $I^{\ominus}$, $SO_4^{2\ominus}$, $CO_3^{2\ominus}$, $CH_3\text{-}OSO_3^{\ominus}$ or $CH_3\text{-}CH_2\text{-}OSO_3^{\ominus}$ and |
| n | is 1 or 2, |

in the form of polymerized units.

**10.** A process as claimed in claim 7, wherein the polyelectrolyte used contains, as at least one monomer having groups which can undergo dissociation in an aqueous medium, a compound of the formula (III)

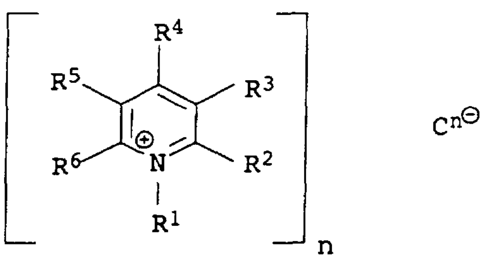

(III),

where

| | |
|---|---|
| $R^1$ to $R^6$, | independently of one another, are each H or $C_1$-$C_{20}$-alkyl, but one of the radicals $R^1$ to $R^6$ is $-CH=CH_2$, |
| $C^{n\ominus}$ | is $Cl^{\ominus}$, $Br^{\ominus}$, $I^{\ominus}$, $SO_4^{2\ominus}$, $CO_3^{2\ominus}$, $CH_3\text{-}OSO_3^{\ominus}$ or $CH_3\text{-}CH_2\text{-}OSO_3^{\ominus}$, and |
| n | is 1 or 2, |

in the form of polymerized units.

**11.** A process as claimed in claim 7, wherein the polyelectrolyte used contains, as at least one monomer having groups which can undergo dissociation in an aqueous medium, a compound of the formula (IV)

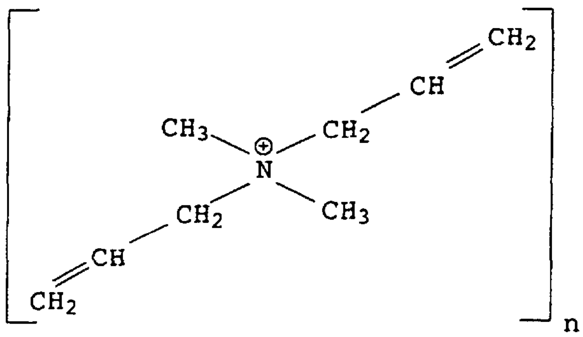

$D^{n\ominus}$ (IV),

where

$D^{n\ominus}$ is $Cl^{\ominus}$, $Br^{\ominus}$, $I^{\ominus}$, $SO_4^{2\ominus}$, $CO_3^{2\ominus}$, $CH_3\text{-}OSO_3^{\ominus}$ or $CH_3\text{-}CH_2\text{-}OSO_3^{\ominus}$ and

n is 1 or 2,

in the form of polymerized units.

**12.** A process as claimed in claim 7, wherein the polyelectrolyte used contains, as at least one monomer having groups which can undergo dissociation in an aqueous medium, a salt of an $\alpha,\beta$-monoethylenically unsaturated carboxylic acid of 3 to 6 carbon atoms in the form of polymerized units.

**13.** A process as claimed in claim 7, wherein the polyelectrolyte used contains, as at least one monomer having groups which can undergo dissociation in an aqueous medium, vinylsulfonic acid or one of its salts in the form of polymerized units.

**14.** A process as claimed in claim 7, wherein the polyelectrolyte used contains, as at least one monomer having groups which can undergo dissociation in an aqueous medium, a compound of the formula (V)

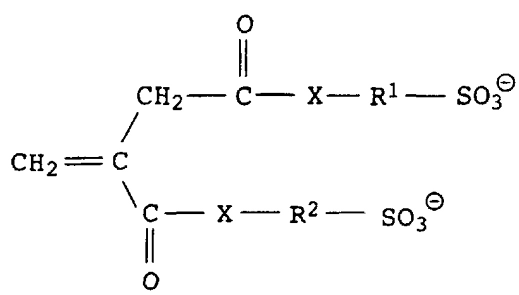

$2E^{\oplus}$ (V),

where

$R^1$ and $R^2$ are each $C_1$-$C_{10}$-alkylene,
X is O or NH, and
$E^{\oplus}$ is an alkali metal ion, $NH_4^{\oplus}$ or (alkaline earth metal ion)$_{1/2}$,

in the form of polymerized units.

**15.** A process as claimed in claim 7, wherein the polyelectrolyte used contains, as at least one monomer having groups which can undergo dissociation in an aqueous medium, a compound of the formula (VI)

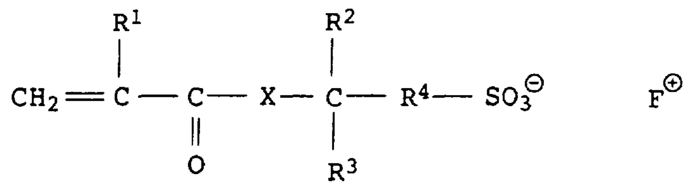
(VI),

where

$R^1$, $R^2$ and $R^3$ are each $C_1$-$C_3$-alkyl,
$R^4$ is $C_1$-$C_5$-alkylene,
X is O or NH and
$F^{\oplus}$ is an alkali metal ion, $NH_4^{\oplus}$ or (alkaline earth metal ion)$_{1/2}$,

in the form of polymerized units.

**16.** A process as claimed in claim 7, wherein the polyelectrolyte used contains, as at least one monomer having groups wich can undergo dissociation in an aqueous medium, a compound of the formula (VII) or (VIII)

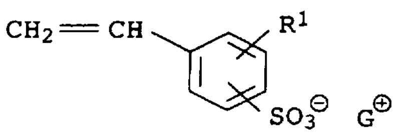
(VII),
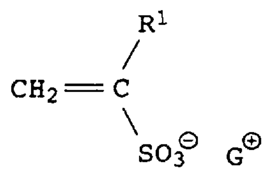
(VIII),

where

$R^1$ is $C_1$-$C_5$-alkyl and
$G^{\oplus}$ is an alkali metal ion, $NH_4^{\oplus}$ or (alkaline earth metal ion)$_{1/2}$,

in the form of polymerized units.

**17.** A process as claimed in any of claims 7 to 16, wherein the polyelectrolyte contains from 5 to 100% of its weight of at least one ethylenically unsaturated monomer having groups which can undergo ionic dissociation in an aqueous medium, in the form of polymerized units.

**18.** A process as claimed in any of claims 7 to 16, wherein the polyelectrolyte contains from 20 to 100% of its weight of at least one ethylenically unsaturated monomer having groups which can undergo ionic dissociation in an aqueous medium, in the form of polymerized units.

**19.** A process as claimed in any of claims 7 to 16, wherein the polyelectrolyte contains from 40 to 100% of its weight of at least one ethylenically unsaturated monomer having groups which can undergo ionic dissociation in an aqueous medium, in the form of polymerized units.

**20.** A process as claimed in any of claims 1 to 19, wherein the polymer dispersed in the aqueous polymer dispersion is composed of from 70 to 100% by weight of esters of acrylic or methacrylic acid with alkanols of 1 to 12 carbon atoms or styrene in the form of a polymer obtained by free radical polymerization.

**21.** A process as claimed in any of claims 1 to 19, wherein the polymer dispersed in the aqueous polymer dispersion is composed of from 70 to 100% by weight of styrene or butadiene in the form of a polymer obtained by free radical polymerization.

**22.** A process as claimed in any of claims 1 to 19, wherein the polymer dispersed in the aqueous polymer dispersion

is composed of from 40 to 100% by weight of vinyl chloride or vinylidene chloride in the form of a polymer obtained by free radical polymerization.

**23.** A process as claimed in any of claims 1 to 19, wherein the polymer dispersed in the aqueous polymer dispersion is composed of from 40 to 100% by weight of vinyl acetate, vinyl propionate or ethylene in the form of a polymer obtained by free radical polymerization.

**24.** A process as claimed in any of claims 1 to 23, wherein the glass transition temperature of the polymer dispersed in the aqueous polymer dispersion is $\leq 50°C$.

**25.** A process as claimed in any of claims 1 to 23, wherein the glass transition temperature of the polymer dispersed in the aqueous polymer dispersion is $\leq 25°C$.

**26.** A process as claimed in any of claims 1 to 25, wherein the drying is carried out by the spray-drying method.

**27.** A process as claimed in claim 26, wherein the inlet temperature of the warm air stream is from 100 to 200°C and the outlet temperature of the warm air stream is from 30 to 90°C.

**28.** A polymer powder obtainable by a process as claimed in any of claims 1 to 27.

**29.** A polymer powder, which is redispersible in an aqueous medium, containing spherical polymer particles having a positive or having a negative electric surface charge and a polyelectrolyte whose polyion has an electric charge opposite to the electric surface charge of the spherical polymer particles.

**30.** Use of a polymer powder as claimed in claim 28 or 29, with the addition of water, as a binder in hydraulically setting materials, paints, finishes, adhesives, coating materials and synthetic resin renders.

**31.** Use of a polyelectrolyte as an assistant in the spray-drying of aqueous polymer dispersions whose disperse polymer particles have a positive or a negative electric surface charge, the charge of the polyion of the polyelectrolyte being opposite to the surface charge of the disperse polymer particles.

**32.** Use of an aqueous polymer dispersion whose disperse polymer particles have a positive or a negative electric surface charge, after the addition of polyelectrolyte having a polyion charged oppositely to the surface charge of the disperse polymer particles, for the preparation of a polymer powder which is redispersible in an aqueous medium.

**Revendications**

**1.** Procédé de préparation de poudres polymères redispersables dans un milieu aqueux, au moyen d'un séchage d'une dispersion aqueuse de polymère, dont les particules de polymère dispersées dans un milieu aqueux présentent une charge électrique superficielle positive ou négative, en ajoutant des auxiliaires de séchage, **caractérisé en ce que** l'on ajoute, à la dispersion aqueuse de polymère à sécher, en tant qu'adjuvant de séchage, un polyélectrolyte qui est, dans sa forme dissociée en un polyion et en contre-ions, soluble dans le milieu de dispersion aqueux, la charge électrique du polyion étant opposée à la charge électrique superficielle des particules de polymère dispersées.

**2.** Procédé selon la revendication 1, **caractérisé en ce que** les particules de polymère dispersées présentent une charge superficielle positive.

**3.** Procédé selon la revendication 1, **caractérisé en ce que** les particules de polymère dispersées présentent une charge superficielle négative.

**4.** Procédé selon l'une quelconque des revendications 1 à 3, **caractérisé en ce que** la masse moléculaire moyenne en nombre du polyélectrolyte va de 1 000 à $3 \cdot 10^6$.

**5.** Procédé selon l'une quelconque des revendications 1 à 4, **caractérisé en ce que** le polyion du polyélectrolyte mis en oeuvre est un polymère organique.

**6.** Procédé selon l'une quelconque des revendications 1 à 5, **caractérisé en ce que** la solubilité du polyélectrolyte mis en oeuvre est, dans l'eau à une température de 25°C et sous une pression de 1 atmosphère, supérieure ou égale à 1 g par 100 g d'eau.

**7.** Procédé selon l'une quelconque des revendications 1 à 6, **caractérisé en ce que** l'on peut obtenir le polyélectrolyte mis en oeuvre, au moyen d'une polymérisation par voie radicalaire de monomères présentant au moins un groupe à insaturation éthylénique, monomères qui comprennent au moins un monomère présentant des groupes pouvant se dissocier en ions dans un milieu aqueux.

**8.** Procédé selon la revendication 7, **caractérisé en ce que** le polyélectrolyte mis en oeuvre comprend, sous forme polymérisée, en tant qu'au moins un monomère présentant des groupes pouvant se dissocier en ions dans un milieu aqueux, un composé de formule générale (I)

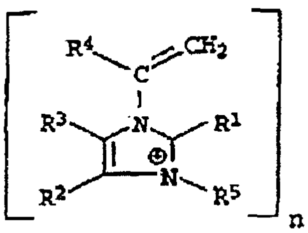

$A^{n\ominus}$ (I)

dans laquelle

| | |
|---|---|
| $A^{n\ominus}$ | représente un ion $Cl^{\ominus}$, $Br^{\ominus}$, $J^{\ominus}$, $SO_4^{2\ominus}$, $CO_3^{2\ominus}$, $CH_3$-$OSO_3^{\ominus}$ ou $CH_3$-$CH_2$-$OSO_3^{\ominus}$, |
| $R^1$ à $R^5$ | représentent, indépendamment les uns des autres, un groupe alkyle en $C_1$ à $C_{20}$, benzyle ou un atome de H, et |
| n | vaut 1 ou 2. |

**9.** Procédé selon la revendication 7, **caractérisé en ce que** le polyélectrolyte mis en oeuvre comprend, sous forme polymérisée, en tant que au moins un monomère présentant des groupes pouvant se dissocier en ions dans un milieu aqueux, un composé de formule générale (II)

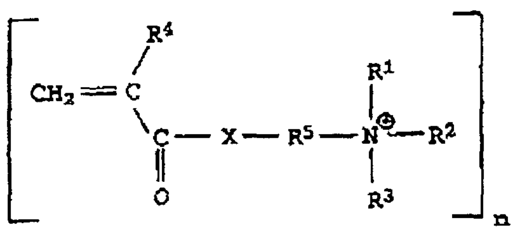

$B^{n\ominus}$ (II)

dans laquelle

| | |
|---|---|
| X | représente un groupe NH ou un atome de O, |
| $R^4$ | représente un atome de H ou un groupe alkyle en $C_1$ à $C_{20}$, |
| $R^5$ | représente un groupe alcène en $C_1$ à $C_{20}$, |
| $R^1$, $R^2$, $R^3$ | représentent, indépendamment les uns des autres, un groupe alkyle en $C_1$ à $C_{20}$, |
| $B^{n\ominus}$ | représente un ion $Cl^{\ominus}$, $Br^{\ominus}$, $J^{\ominus}$, $SO_4^{2\ominus}$, $CO_3^{2\ominus}$, $CH_3$-$OSO_3^{\ominus}$ ou $CH_3$-$CH_2$-$OSO_3^{\ominus}$, et |
| n | vaut 1 ou 2. |

**10.** Procédé selon la revendication 7, **caractérisé en ce que** le polyélectrolyte mis en oeuvre comprend, sous forme polymérisée, en tant que au moins un monomère présentant des groupes pouvant se dissocier en ions dans un milieu aqueux, un composé de formule générale (III)

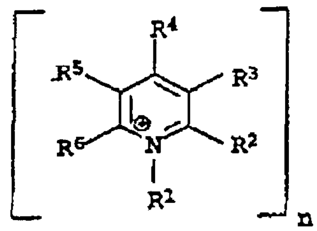

$C^{n\ominus}$ (III)

dans laquelle

$R^1$ à $R^6$ représentent, indépendamment les uns des autres, un atome de H ou un groupe alkyle en $C_1$ à $C_{20}$, mais avec un des groupes $R^1$ à $R^6$ représentant un groupe $-CH=CH_2$,

$C^{n\ominus}$ représente un ion $Cl^{\ominus}$, $Br^{\ominus}$, $J^{\ominus}$, $SO_4^{2\ominus}$, $CO_3^{2\ominus}$, $CH_3\text{-}OSO_3^{\ominus}$ ou $CH_3\text{-}CH_2\text{-}OSO_3^{\ominus}$, et

n vaut 1 ou 2.

**11.** Procédé selon la revendication 7, **caractérisé en ce que** le polyélectrolyte mis en oeuvre comprend, sous forme polymérisée, en tant que au moins un monomère présentant des groupes pouvant se dissocier en ions dans un milieu aqueux, un composé de formule générale (IV)

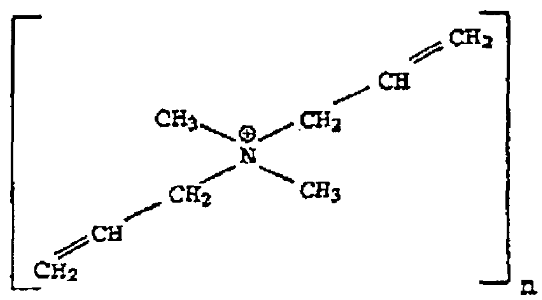

$D^{n\ominus}$ (IV)

dans laquelle

$D^{n\ominus}$ représente un ion $Cl^{\ominus}$, $Br^{\ominus}$, $J^{\ominus}$, $SO_4^{2\ominus}$, $CO_3^{2\ominus}$, $CH_3\text{-}OSO_3^{\ominus}$ ou $CH_3\text{-}CH_2\text{-}OSO_3^{\ominus}$, et

n vaut 1 ou 2.

**12.** Procédé selon la revendication 7, **caractérisé en ce que** le polyélectrolyte mis en oeuvre comprend, sous forme polymérisée, en tant que au moins un monomère présentant des groupes pouvant se dissocier en ions dans un milieu aqueux, un sel d'un acide carboxylique à insaturation $\alpha,\beta$-monoéthylénique possédant 3 à 6 atomes de C.

**13.** Procédé selon la revendication 7, **caractérisé en ce que** le polyélectrolyte mis en oeuvre comprend, sous forme polymérisée, en tant que au moins un monomère présentant des groupes pouvant se dissocier en ions dans un milieu aqueux, l'acide vinylsulfonique et/ou un de ses sels.

**14.** Procédé selon la revendication 7, **caractérisé en ce que** le polyélectrolyte mis en oeuvre comprend, sous forme polymérisée, en tant que au moins un monomère présentant des groupes pouvant se dissocier en ions dans un milieu aqueux, un composé de formule générale (V)

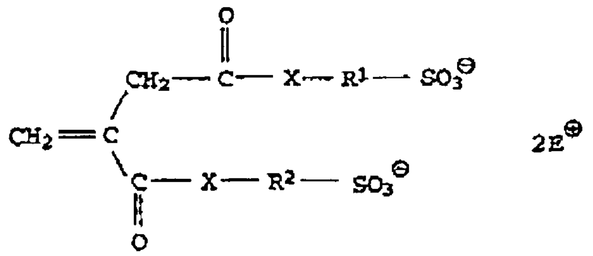

(V)

dans laquelle

$R^1$, $R^2$ représentent un groupe alcène en $C_1$ à $C_{10}$,
X représente un atome de O ou un groupe NH, et
$E^{\oplus}$ représente un ion d'un métal alcalin, un groupe $NH_4^{\oplus}$ ou un (ion d'un métal alcalino-terreux)$_{1/2}$.

**15.** Procédé selon la revendication 7, **caractérisé en ce que** le polyélectrolyte mis en oeuvre comprend, sous forme polymérisée, en tant que au moins un monomère présentant des groupes pouvant se dissocier en ions dans un milieu aqueux, un composé de formule générale (VI)

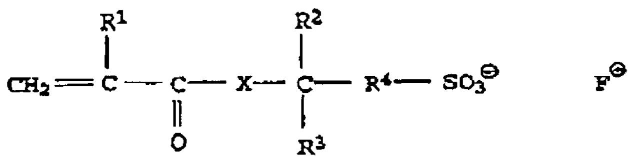

(VI)

dans laquelle

$R^1$, $R^2$, $R^3$ représentent un groupe alkyle en $C_1$ à $C_3$,
$R^4$ représente un groupe alcène en $C_1$ à $C_5$,
X représente un atome de O ou un groupe NH, et
$F^{\oplus}$ représente un ion d'un métal alcalin, un groupe $NH_4^{\oplus}$ ou un (ion d'un métal alcalinoterreux)$_{1/2}$.

**16.** Procédé selon la revendication 7, **caractérisé en ce que** le polyélectrolyte mis en oeuvre comprend, sous forme polymérisée, en tant que au moins un monomère présentant des groupes pouvant se dissocier en ions dans un milieu aqueux, un composé de formule générale (VII) et/ou (VIII)

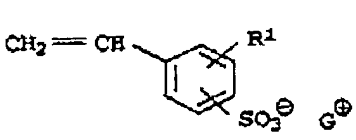

(VII),

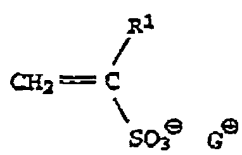

(VIII)

dans laquelle

$R^1$ représente un groupe alkyle en $C_1$ à $C_5$,
$G^{\oplus}$ représente un ion d'un métal alcalin, un groupe $NH_4^{\oplus}$ ou un (ion d'un métal alcalino-terreux)$_{1/2}$.

**17.** Procédé selon l'une quelconque des revendications 7 à 16, **caractérisé en ce que** le polyélectrolyte comprend, sous forme polymérisée, à raison de 5% à 100% par rapport à son poids, au moins un monomère à insaturation éthylénique présentant des groupes pouvant se dissocier en ions dans un milieu aqueux.

**18.** Procédé selon l'une quelconque des revendications 7 à 16, **caractérisé en ce que** le polyélectrolyte comprend,

sous forme polymérisée, à raison de 20% à 100% par rapport à son poids, au moins un monomère à insaturation éthylénique présentant des groupes pouvant se dissocier en ions dans un milieu aqueux.

**19.** Procédé selon l'une quelconque des revendications 7 à 16, **caractérisé en ce que** le polyélectrolyte comprend, sous forme polymérisée, à raison de 40% à 100% par rapport à son poids, au moins un monomère à insaturation éthylénique présentant des groupes pouvant se dissocier en ions dans un milieu aqueux.

**20.** Procédé selon l'une quelconque des revendications 1 à 19, **caractérisé en ce que** le polymère dispersé dans la dispersion aqueuse de polymère est composé, sous forme polymérisée par voie radicalaire, de 70% à 100% en poids d'esters de l'acide acrylique et/ou méthacrylique et d'alcanols possédant 1 à 12 atomes de C et/ou de styrène.

**21.** Procédé selon l'une quelconque des revendications 1 à 19, **caractérisé en ce que** le polymère dispersé dans la dispersion aqueuse de polymère est composé, sous forme polymérisée par voie radicalaire, de 70% à 100% en poids de styrène et/ou de butadiène.

**22.** Procédé selon l'une quelconque des revendications 1 à 19, **caractérisé en ce que** le polymère dispersé dans la dispersion aqueuse de polymère est composé, sous forme polymérisée par voie radicalaire, de 40% à 100% en poids de chlorure de vinyle et/ou de chlorure de vinylidène.

**23.** Procédé selon l'une quelconque des revendications 1 à 19, **caractérisé en ce que** le polymère dispersé dans la dispersion aqueuse de polymère est composé, sous forme polymérisée par voie radicalaire, de 40% à 100% en poids d'acétate de vinyle, de propionate de vinyle et/ou d'éthylène.

**24.** Procédé selon l'une quelconque des revendications 1 à 23, **caractérisé en ce que** la température de transition vitreuse du polymère dispersé dans la dispersion aqueuse de polymère, est inférieure ou égale à 50°C.

**25.** Procédé selon l'une quelconque des revendications 1 à 23, **caractérisé en ce que** la température de transition vitreuse du polymère dispersé dans la dispersion aqueuse de polymère, est inférieure ou égale à 25°C.

**26.** Procédé selon l'une quelconque des revendications 1 à 25, **caractérisé en ce que** l'on réalise le séchage selon le procédé de séchage par pulvérisation.

**27.** Procédé selon la revendication 26, **caractérisé en ce que** la température d'entrée du courant d'air chaud va de 100°C à 200°C et **en ce que** la température de sortie du courant d'air chaud va de 30°C à 90°C.

**28.** Poudre polymère que l'on peut obtenir selon un procédé selon l'une quelconque des revendications 1 à 27.

**29.** Poudre polymère redispersable dans un milieu aqueux, contenant des particules de polymère sphériques présentant une charge électrique superficielle positive ou négative, et contenant un polyélectrolyte dont le polyion présente une charge électrique qui est opposée à la charge électrique superficielle des particules de polymère sphériques.

**30.** Mise en oeuvre de la poudre polymère selon la revendication 28 ou 29, en ajoutant de l'eau en tant que liant dans des compositions, des produits couvrants, des laques, des colles, des compositions de revêtement, des enduits synthétiques, tous à prise hydraulique.

**31.** Mise en oeuvre d'un polyélectrolyte en tant qu'auxiliaire pour le séchage par pulvérisation de dispersions de polymère aqueuses, dont les particules de polymère dispersées présentent une charge électrique superficielle positive ou négative, la charge du polyion du polyélectrolyte étant opposée à la charge superficielle des particules de polymère dispersées.

**32.** Mise en oeuvre d'une dispersion aqueuse de polymère dont les particules de polymère dispersées présentent une charge électrique superficielle positive ou négative, après l'addition d'un polyélectrolyte qui comprend un polyion présentant une charge opposée à la charge superficielle des particules de polymère dispersées, pour la préparation d'une poudre polymère redispersable dans un milieu aqueux.